# EUROPEAN PATENT SPECIFICATION

(11) **EP 3 511 639 B1**
(45) Date of publication and mention of the grant of the patent: **24.01.2024**
(21) Application number: 16915761.7
(22) Date of filing: 12.09.2016
(51) Int. Cl.: F24F 11/30, F24F 11/79, F24F 11/77, F24F 11/74, F24F 11/65, F24F 13/10, F24F 11/62, F24F 11/61, F24F 110/10, F24F 120/10

(54) **SYSTEM**
SYSTEM
SYSTÈME

(43) Date of publication of application: 17.07.2019
(73) Proprietor: Mitsubishi Electric Corporation, Chiyoda-ku Tokyo 100-8310 (JP)
(72) Inventor: HORIE, Hayato, Tokyo 100-8310 (JP); ITO, Shinichi, Tokyo 100-8310 (JP)
(74) Representative: Studio Torta S.p.A.
(86) International application number: PCT/JP2016/076814
(87) International publication number: WO 2018/047343

(56) References cited:
- WO-A1-2012/017478
- WO-A1-2012/017478
- WO-A1-2015/189899
- WO-A1-2015/189899
- JP-A- H10 300 165
- JP-A- H10 300 165
- JP-A- 2006 071 122
- JP-A- 2006 098 017
- JP-A- 2009 127 965
- JP-A- 2009 127 965
- JP-A- 2013 040 713
- JP-A- 2015 169 395
- JP-A- 2015 169 395
- US-A- 4 828 019

## Description

### TECHNICAL FIELD

The present invention relates to an air conditioning system for a plurality of rooms.

### BACKGROUND ART

An air conditioning system for a plurality of rooms has been conventionally known. In one air conditioning system proposed as such an air conditioning system, a communication unit communicating a plurality of rooms with each other is provided in a wall partitioning the plurality of rooms. In this configuration, an air conditioner is placed in one of the plurality of rooms, and air is blown from this room to another adjacent room through the communication unit (for example, see PTL 1 to PTL 4).

For example, Japanese Patent Laying-Open No. 2005-90824 (PTL 1) discloses a configuration in which an inter-room fan blowing indoor air is placed on a side wall between a first room with an air conditioner placed therein and a second room adjacent to the first room. According to PTL 1, the inter-room fan is operated when predetermined conditions are satisfied, thereby blowing the air in the first room, directly subjected to air conditioning by the air conditioner, to the second room. That is to say, the air used for air conditioning of the first room is used to air-condition the second room. For example, the predetermined conditions are as follows: during summer, the room temperature of the first room is lower than a predetermined temperature, and a room temperature difference between the first room and the second room is equal to or higher than a predetermined temperature difference.

### CITATION LIST

### PATENT LITERATURE

PTL 1: Japanese Patent Laying-Open No. 2005-90824
PTL 2: Japanese Patent No. 3111084
PTL 3 : Japanese Patent Laying-Open No. 2000-146252
PTL 4: Japanese Patent Laying-Open No. 2015-169395

### SUMMARY OF INVENTION

### TECHNICAL PROBLEM

The air conditioning system described in PTL 1 uses the air used for air conditioning of the first room to air-condition the second room. For example, in cooling the second room, the effects of cooling the second room cannot be accordingly achieved unless the temperature of the first room is equal to or lower than the set temperature of the second room. Consequently, air conditioning is performed based on the set temperature of the second room in the first room, which may result in the room temperature of the first room deviating from the original set temperature. This may lead to loss of comfort of an occupant in the first room.

Air conditioning of the second room requires air conditioning of the first room, which may reduce the air conditioning efficiency of the air conditioning system.

The present invention has been made to solve the above problems, and has an object to achieve high operation efficiency and occupant's comfort in an air conditioning system for a plurality of rooms.

### SOLUTION TO PROBLEM

The present invention provides a system as defined in the annexed set of claims. An air conditioning system air-conditions a plurality of rooms. The plurality of rooms include a first room and a second room separated from the first room by a first partition unit. The first partition unit has a first communication hole for communicating the first room with the second room. The air conditioning system includes an air conditioner and a first blower. The air conditioner is configured to blow a first airflow and a second airflow and introduce at least the second airflow into the first communication hole. The first blower is configured to introduce at least the second airflow passed through the first communication hole into the second room.

### ADVANTAGEOUS EFFECTS OF INVENTION

The present invention can achieve both of high operation efficiency and occupant's comfort in an air conditioning system for a plurality of rooms.

### BRIEF DESCRIPTION OF DRAWINGS

Fig. 1 shows a configuration of an air conditioning system according to Embodiment 1 of the invention.
Fig. 2 is a refrigerant circuit diagram of an air conditioner.
Fig. 3 schematically shows the appearance of an indoor unit.
Fig. 4 is a diagram illustrating control of a direction and a volume of air of airflow in the indoor unit.
Fig. 5 is a perspective view schematically showing the appearance of a blower.
Fig. 6 is a functional block diagram illustrating a control device of the air conditioner.
Fig. 7 is a diagram for illustrating a mode of air-conditioning a room R1 alone.
Fig. 8 is a diagram for illustrating a mode of air-conditioning a room R2 alone.
Fig. 9 is a diagram for illustrating a mode of air-conditioning room R1 and room R2.
Fig. 10 is a flowchart illustrating an example of control of volumes of air of airflows B1 and B2 blown from the air conditioner.
Fig. 11 is a functional block diagram showing a first configuration example of wind direction control in the control device.
Fig. 12 is a diagram for illustrating a blowing direction learning process by a wind direction learning unit.
Fig. 13 is a diagram illustrating an example relationship between airflow direction and set temperature arrival time.
Fig. 14 is a flowchart illustrating a procedure of the blowing direction learning process by the wind direction learning unit.
Fig. 15 is a functional block diagram showing a second configuration example of wind direction control in the control device.
Fig. 16 is a functional block diagram showing a third configuration example of wind direction control in the control device.
Fig. 17 is a diagram illustrating another configuration example of air volume control in the control device.
Fig. 18 is a functional block diagram showing a first configuration example of operation control in the control device.
Fig. 19 is a flowchart illustrating the first configuration example of operation control in the control device.
Fig. 20 is a functional block diagram showing a second configuration example of operation control in the control device.
Fig. 21 illustrates an example of air conditioning of room R2 based on an expected entrance/exit time to/from room R2.
Fig. 22 is a diagram for illustrating a mode of air-conditioning room R1 and a room R3.
Fig. 23 is a diagram for illustrating a mode of air-conditioning room R2 and room R3.
Fig. 24 is a flowchart illustrating an example of air volume control of airflows B1 and B2 blown from the air conditioner.
Fig. 25 is a diagram for illustrating a mode of air-conditioning room R1, room R2, and room R3.

### DESCRIPTION OF EMBODIMENTS OF THE INVENTION

Embodiments of the present invention will be described below in detail with reference to the drawings. The same or corresponding parts are designated by the same references, and description thereof will not be repeated.

### [Embodiment 1 of the invention]

### [Configuration of Air Conditioning System]

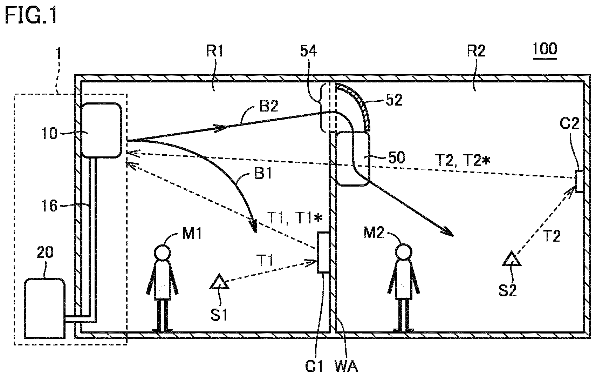

Fig. 1 shows a configuration of an air conditioning system 100 according to Embodiment 1. Air conditioning system 100 according to Embodiment 1 is configured to air-condition a plurality of rooms. In the example of Fig. 1, air conditioning system 100 is configured to air-condition a room R1 (first room) and a room R2 (second room). Room R2 is separated from room R1 by a wall WA (first partition unit).

An air conditioner 1 is placed in room R1. Air conditioner 1 includes an indoor unit 10 and an outdoor unit 20. Indoor unit 10 and outdoor unit 20 are connected to each other by a refrigerant pipe 16.

Indoor unit 10 is, for example, a wall-mounted indoor unit and is placed on a wall different from wall WA. Indoor unit 10 is preferably placed at a higher location near the ceiling of room R1. As described below, indoor unit 10 is configured to include a control device of air conditioner 1.

A controller C1 and a room temperature sensor S1 are further placed in room R1. Controller C1 is a remote control for user interface.

Controller C1 includes a display, an operation switch, and a control device. The control device can be configured of a microcomputer. The operation switch is commonly configured of a press switch that can be operated by a user (e.g., an occupant M1 of room R1). Alternatively, when the display is configured of a touch panel, the display and the operation switch can be provided integrally.

Room temperature sensor S1 detects a room temperature T1 of room R1. A value detected by room temperature sensor S1 is input to controller C1. Room temperature sensor S1 may be placed inside controller C1 or inside indoor unit 10 as long as it can detect the room temperature of room R1.

Controller C1 and indoor unit 10 are configured to communicate with each other by wire or wirelessly. The operation of air conditioner 1 is accordingly controlled in response to a user instruction input to controller C1. Specifically, various operation instructions (e.g., cooling operation, heating operation) and a set temperature (cooling temperature, heating temperature) T1* from the user which are input to controller C1, and a detected value T1 by room temperature sensor S1 are input to the control device in indoor unit 10.

Wall WA has a communication hole 54 (first communication hole) for communicating room R1 with room R2. Communication hole 54 is preferably placed at a higher location near the ceiling of room R1.

A blower 50 is placed in room R2. Blower 50 is, for example, a wall-mounted blower and is placed on wall WA. Blower 50 is preferably placed below communication hole 54.

A controller C2 and a room temperature sensor S2 are further placed in room R2. Controller C2 is a remote control for user interface.

Controller C2 is similar to controller C1 described above in basic configuration. Room temperature sensor S2 detects a room temperature T2 of room R2. A value detected by room temperature sensor S2 is input to controller C2. Room temperature sensor S2 may be placed inside controller C2 or inside blower 50 as long as it can detect the room temperature of room R2.

Controller C2 and indoor unit 10 are configured to communicate with each other by wire or wirelessly. Various operation instructions and a set temperature (cooling temperature, heating temperature) T2* from a user (e.g., an occupant M2 of room R2) which are input to controller C2 and a detected value T2 by room temperature sensor S2 are input to the control device in indoor unit 10.

Controllers C1 and C2 do not need to be placed in rooms R1 and R2, respectively. Controller C1 may be placed outside room R1 and communicate with room temperature sensor S1 and air conditioner 1 by a wireless communication scheme such as LTE (Long Term Evolution), CDMA (Code Division Multiple Access), or Bluetooth (registered trademark). Controller C2 may be placed outside room R2 and communicate with room temperature sensor S2 and blower 50 by the wireless communication scheme.

Various operation instructions and set temperature input to each of controllers C1 and C2 may be provided by a higher-order controller that controls air conditioning system 100 in a centralized manner. In the present specification, the controller refers to any of controller C1, controller C2, and the high-order controller.

The operation of air conditioning system 100 will be described with reference to Fig. 1.

In air conditioning of room R1 and room R2 by one air conditioner 1, indoor unit 10 of air conditioner 1 is configured to blow a first airflow B1 from an air outlet toward room R1 and also blow a second airflow B2 toward communication hole 54. In other words, indoor unit 10 can adjust the direction of first airflow B1 and the direction of second airflow B2 independently of each other in the configuration in which first airflow B1 and second airflow B2 are blown in parallel.

Second airflow B2 passes through communication hole 54 and is then introduced into room R2 by blower 50. That is to say, second airflow B2 blown from the outlet of air conditioner 1 is used for air conditioning of room R2. In contrast, first airflow B1 blown from the outlet of air conditioner 1 is used for air conditioning of room R1.

In air conditioning of room R1 and room R2 by one air conditioner, a conventional air conditioning system introduces the air in room R1 directly air-conditioned by the air conditioner into room R2 by a blower. That is to say, the air used for air conditioning of room R1 is used for air conditioning of room R2.

With this configuration, to cool room R2, the air conditioner first air-conditions room R1 such that room temperature T1 of room R1 is equal to or lower than set temperature T2* of room R2. The air conditioner then blows the air in room R1 air-conditioned to set temperature T2* or lower to room R2 by the blower. To heat room R2, the air conditioner air-conditions room R1 such that room temperature T1 of room R1 is equal to or higher than set temperature T2* of room R2. The air conditioner then introduces air in room R1 air-conditioned to set temperature T2* or higher into room R2.

In room R1, room temperature T1 is controlled based on set temperature T2* of room R2 in this manner. Thus, deviation of room temperature T1 from the original set temperature T1* may lead to loss of comfort of occupant M1 in room R1. Since air conditioning of room R2 requires air conditioning of room R1, the air conditioning efficiency of the air conditioning system may decrease.

In air conditioning system 100 according to Embodiment 1, indoor unit 10 of air conditioner 1 is configured to blow an airflow from the outlet toward communication hole 54 in air conditioning of room R2. That is to say, the airflow generated in indoor unit 10 passes through communication hole 54 and is introduced into room R2 to be used for air conditioning of air conditioning of room R2.

Consequently, room R2 can be directly air-conditioned by the airflow blown from air conditioner 1, and accordingly, the air in room R1 which has been subjected to air conditioning is not required for air conditioning of room R2. As a result, room R1 can be air-conditioned independently of room R2.

For example, in the configuration for air conditioning of room R1 and room R2 as shown in Fig. 1, first airflow B1 from indoor unit 10 is blown toward room R1, and second airflow B2 is blown toward communication hole 54. In this configuration, the wind direction and the volume of air of each of first airflow B1 and second airflow B2 can be adjusted independently of each other to air-condition room R1 and room R2 independently of each other.

Consequently, comfort of occupant M2 in room R2 and comfort of occupant M1 in room R1 can be achieved together. Since air conditioner 1 can blow second airflow B2 toward communication hole 54 to air-condition room R2 without air conditioning of room R1, the air conditioning efficiency by air conditioning system 100 can be improved.

### [Configuration of Air Conditioner]

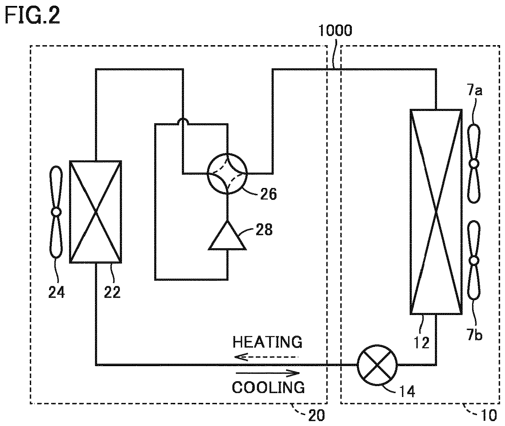

The configuration of air conditioner 1 will now be described with reference to Figs. 2 to 4.

Fig. 2 is a refrigerant circuit diagram of air conditioner 1. With reference to Fig. 2, air conditioner 1 includes indoor unit 10 and outdoor unit 20.

Indoor unit 10 includes a heat exchanger 12, blowing fans 7a and 7b, and a throttle device 14. Heat exchanger 12 serves as a condenser that condenses refrigerant or an evaporator that evaporates refrigerant. Blowing fans 7a and 7b blow air toward heat exchanger 12. Throttle device 14 decompresses the condensed refrigerant.

Outdoor unit 20 includes a heat exchanger 22, a blowing fan 24, a compressor 28, and a four-way valve 26. Heat exchanger 22 serves as a condenser that condenses refrigerant or an evaporator that evaporates refrigerant. Blowing fan 24 blows air toward heat exchanger 22. Compressor 28 compresses refrigerant. Four-way valve 26 reverses a flow of refrigerant flowing through heat exchanger 22.

A refrigerating cycle 1000 can switch a refrigerant circuit between a path for heating and a path for cooling. The refrigerant circuit for heating returns refrigerant to compressor 28 through compressor 28, heat exchanger 12, throttle device 14, and heat exchanger 22 in the stated order. The refrigerant circuit for cooling returns refrigerant to compressor 28 through compressor 28, heat exchanger 22, throttle device 14, and heat exchanger 12 in the stated order.

A blowing fan 7a (hereinafter, also referred to as "first fan") can change a flow rate of the air supplied to heat exchanger 12. A blowing fan 7b (hereinafter, also referred to as "second fan") can change a flow rate of the air supplied to heat exchanger 12. Blowing fan 24 can change a flow rate of the air supplied to heat exchanger 22. Each of blowing fans 7a, 7b, and 24 is a centrifugal fan or multiblade fan driven by, for example, a driving motor such as a DC motor. First fan 7a and second fan 7b are configured to be driven independently of each other.

Compressor 28 can change operation capacity. Compressor 28 is, for example, a positive-displacement compressor driven by a motor (not shown) controlled by an inverter (not shown). A plurality of compressors may be connected in parallel or in series in place of compressor 28 of Fig. 2.

Throttle device 14 can adjust a flow rate of refrigerant flowing in the refrigerant circuit. Throttle device 14 is formed of, for example, an electronic expansion valve configured to adjust a throttle angle by a stepping motor (not shown), a mechanical expansion valve including a diaphragm in a pressure sensing unit, or a capillary tube.

Four-way valve 26 is a valve for switching the direction of refrigerant flowing through heat exchangers 12 and 22 by a member sliding therein. In cooling of a room, the member slides in four-way valve 26 to cause refrigerant to flow through a path indicated by the solid line. Consequently, a refrigerant circuit is configured in which refrigerant flows in order of compressor 28, heat exchanger 22, throttle device 14, and heat exchanger 12. In heating of a room, the member slides in four-way valve 26 to cause refrigerant to flow through a path indicated by the broken line. Consequently, a refrigerant circuit is configured in which refrigerant flows in order of compressor 28, heat exchanger 12, throttle device 14, and heat exchanger 22.

The refrigerant used in air conditioner 1 is, for example, HFC refrigerant such as R410A, R407C, or R404A, HCFC refrigerant such as R22 or R134a, or natural refrigerant such as hydrocarbon or helium.

The cooling operation of refrigerating cycle 1000 will be described with reference to Fig. 2. The refrigerant discharged from compressor 28 flows through four-way valve 26 to heat exchanger 22. Heat exchanger 22 operates as a condenser. The refrigerant is condensed into a liquid in heat exchange with air, and the liquid flows to throttle device 14. Heat exchanger 12 operates as an evaporator. The refrigerant evaporates by taking away the heat from the air in room R1. This reduces the temperature of room R1 in heat exchanger 12. The refrigerant subsequently flows through four-way valve 26 and is sucked by compressor 28 again.

The heating operation of refrigerating cycle 1000 will now be described. The refrigerant discharged from compressor 28 flows through four-way valve 26 to heat exchanger 12. Heat exchanger 12 operates as a condenser. The refrigerant is condensed into a liquid by emitting heat to the air in room R1. This increases the temperature of room R1. The refrigerant subsequently flows to throttle device 14. The refrigerant is decompressed by throttle device 14. Heat exchanger 22 operates as an evaporator. The refrigerant evaporates after heat exchange with air, and then flows through four-way valve 26 and is sucked by compressor 28 again.

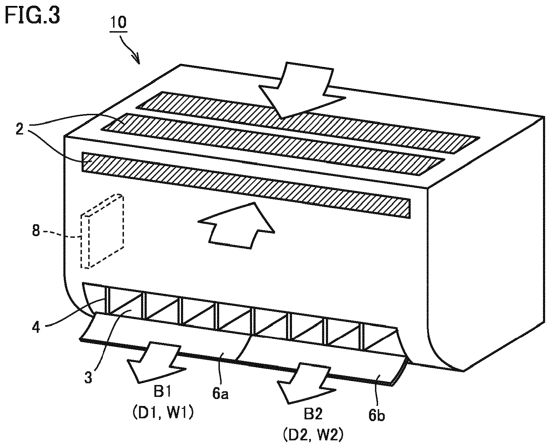

Fig. 3 schematically shows the appearance of indoor unit 10. With reference to Fig. 3, air inlets 2 are provided in the upper surface and the front upper portion of the body of indoor unit 10. An air outlet 3 is provided at the front lower portion of the body of indoor unit 10. Indoor unit 10 further includes a wind direction vane 4, flaps 6a and 6b, and a control device 8.

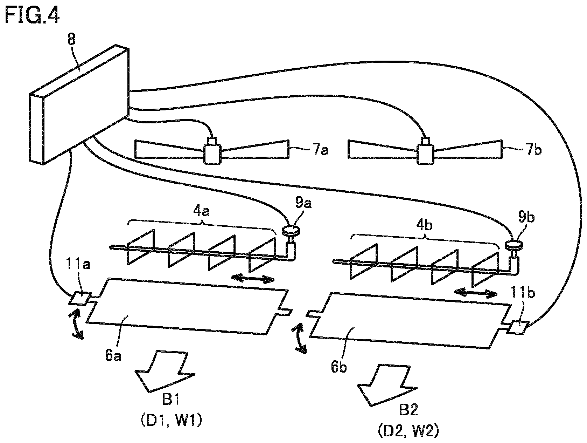

Wind direction vane 4 is configured to change the direction of an airflow blown from outlet 3 leftward and rightward. Wind direction vane 4 includes a first vane 4a and a second vane 4b (see Fig. 4). First vane 4a and second vane 4b are arranged in parallel to outlet 3.

First flap 6a and second flap 6b are arranged in parallel to outlet 3. Each of flaps 6a and 6b is configured to change the direction of an airflow blown from outlet 3 upward and downward.

That is to say, wind direction vane 4 and flaps 6a and 6b constitute a "wind direction adjusting member" for adjusting the directions of airflows B1 and B2 blown from outlet 3.

Control device 8 controls the operation of air conditioner 1. Control device 8 includes, for example, a CPU (Central Processing Unit), a storage device, and an I/O buffer, which are not shown, and controls air conditioner 1 and blower 50. Such control may be subjected to processing by software, as well as processing by dedicated software (electronic circuit).

Control device 8 controls an angle of inclination of each of wind direction vane 4, first flap 6a, and second flap 6b to adjust a direction D1 of first airflow B1 and a direction of D2 of second airflow B2 which are blown from outlet 3. Control device 8 further controls the speed of rotation of each of first fan 7a and second fan 7b (Fig. 2) to adjust a volume of air W1 of first airflow B1 and a volume of air W2 of second airflow B2 which are blown from outlet 3.

Although an airflow blown from the left half (leftward in the sheet of Fig. 3) of outlet 3 of indoor unit 10 is first airflow B1 and an airflow blown from the right half (rightward in the sheet of Fig. 3) of outlet 3 is second airflow B2 in the present embodiment as shown in Fig. 3, the combination of airflows may be opposite. Which combination is used may be selected based on the positional relationship between outlet 3 of indoor unit 10 and communication hole 54.

Fig. 4 illustrates control of a direction and a volume of air of airflow in indoor unit 10. With reference to Fig. 4, first fan 7a and second fan 7b are arranged in parallel to air outlet 3 in indoor unit 10 (see Fig. 3).

First fan 7a can be rotationally driven by a fan motor (not shown) to supply air to heat exchanger 12 (not shown). The fan motor can receive an instruction from control device 8 to drive first fan 7a at a predetermined speed of rotation.

Second fan 7b can be rotationally driven by a fan motor (not shown) to supply air to heat exchanger 12. The fan motor can receive an instruction from control device 8 to drive second fan 7b at a predetermined speed of rotation. This allows first fan 7a and second fan 7b to control their volumes of blowing independently of each other.

First vane 4a receives an airflow supplied from first fan 7a. First vane 4a is configured to be driven by motor 9a to rotate, thereby changing its direction leftward and rightward. Motor 9a can receive an instruction from control device 8 to operate first vane 4a at a predetermined angle of inclination.

Second vane 4b receives an airflow supplied from second fan 7b. Second vane 4b is configured to be driven by motor 9b to rotate, thereby changing its direction leftward and rightward. Motor 9b can receive an instruction from control device 8 to operate second vane 4b at a predetermined angle of inclination.

Motor 9a and motor 9b can operate independently of each other in accordance with an instruction from control device 8. This causes first vane 4a and second vane 4b to change their directions independently of each other.

First flap 6a receives an airflow supplied from first fan 7a. First flap 6a is configured to be driven by motor 11a to rotate, thereby changing its direction upward and downward. Motor 11a can receive an instruction from control device 8 to operate first flap 6a at a predetermined angle of inclination.

Second flap 6b receives an airflow supplied from second fan 7b. Second flap 6b is configured to be driven by motor 11b to rotate, thereby changing its direction upward an downward. Motor 11b can receive an instruction from control device 8 to operate second flap 6b at a predetermined angle of inclination.

Motor 11a and motor 11b can operate independently of each other in accordance with an instruction from control device 8. This allows first flap 6a and second flap 6b to change their directions independently of each other.

With such a configuration, the direction of the airflow supplied from first fan 7a is adjusted upward and downward, as well as leftward and rightward by first vane 4a and first flap 6a, so that the airflow is blown from outlet 3. That is to say, first vane 4a and first flap 6a constitute a "first wind direction adjusting member" for adjusting direction D1 of first airflow B1. First fan 7a is configured to adjust volume of air W1 of first airflow B1.

The direction of the airflow supplied from second fan 7b is adjusted upward and downward, as well as leftward and rightward by second vane 4b and second flap 6b, so that the airflow is blown from outlet 3. That is to say, second vane 4b and second flap 6b constitute a "second wind direction adjusting member" for adjusting direction D2 of second airflow B2. Second fan 7b is configured to adjust volume of air W2 of second airflow B2.

### [Configuration of Blower]

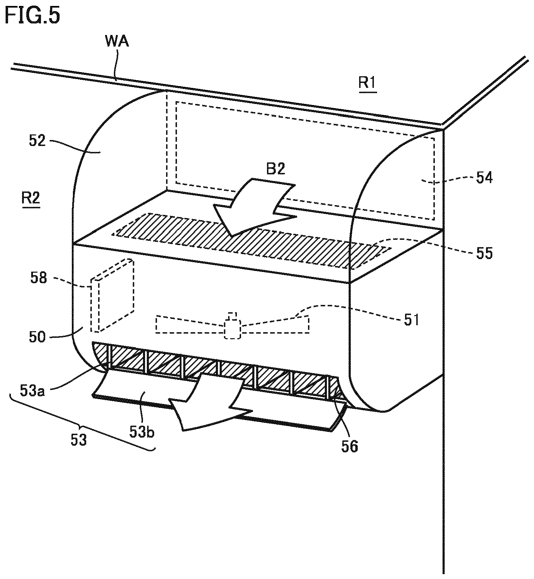

Fig. 5 is a perspective view schematically showing the appearance of blower 50. With reference to Fig. 5, an air inlet 55 is provided in the upper surface of the body of blower 50. An air outlet 56 is provided at the front lower portion of the body of blower 50. Blower 50 includes a blowing fan 51, a wind direction adjusting member 53, and a control device 58. Blowing fan 51 is, for example, a centrifugal fan or multiblade fan driven by a driving motor such as a DC motor.

Second airflow B2 that has passed through communication hole 54 is guided through inlet 55 into the body of blower 50. An introducing member 52 is attached to the upper surface of blower 50. Introducing member 52 has, for example, a tubular shape with an opening on a communication hole 54 side and an opening on an inlet 55 side. Such a configuration allows second airflow B2 that has passed through communication hole 54 to be supplied to blower 50 efficiently. Consequently, blower 50 can introduce second airflow B2 into room R2 efficiently, thereby improving the air conditioning efficiency of room R2.

Control device 58 starts an operation of blower 50 in accordance with an operation start instruction provided from control device 8 of air conditioner 1. Specifically, upon receipt of the operation start instruction, control device 58 activates blowing fan 51 and also causes a wind direction vane 53a and a flap 53b of wind direction adjusting member 53 to operate at a predetermined angle of inclination.

Control device 58 stops the operation of blower 50 in accordance with an operation stop instruction provided from control device 8. Specifically, upon receipt of the operation stop instruction, control device 58 stops blowing fan 51 and also stops the operation of wind direction adjusting member 53.

### [Control Configuration]

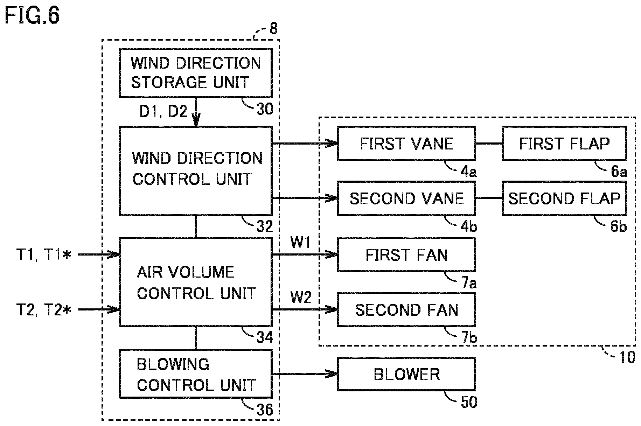

The control configuration of air conditioning system 100 will now be described with reference to Fig. 6.

Fig. 6 is a functional block diagram illustrating control device 8 of air conditioner 1. In the functional block diagrams including Fig. 6 which will be described below, the function of each block can be realized through software processing and/or hardware processing performed by control device 8.

With reference to Fig. 6, control device 8 includes a wind direction storage unit 30, a wind direction control unit 32, an air volume control unit 34, and a blowing control unit 36.

Wind direction storage unit 30 stores information indicative of direction D1 of first airflow B1 and direction D2 of second airflow B2 which are blown from outlet 3 of indoor unit 10. Wind direction storage unit 30 is configured of, for example, a nonvolatile memory such as flash memory. Directions D1 and D2 can be set per operation mode of the air conditioning system described below.

Wind direction control unit 32 controls the operations of first vane 4a and first flap 6a that constitute the first wind direction adjusting member, based on direction D1 read from wind direction storage unit 30. Specifically, wind direction control unit 32 drives motors 9a and 11a (see Fig. 4) such that first vane 4a and first flap 6a each have a predetermined angle of inclination corresponding to direction D1.

Wind direction control unit 32 further controls the operations of second vane 4b and second flap 6b that constitute the second wind direction adjusting member, based on direction D2 read from wind direction storage unit 30. Specifically, wind direction control unit 32 drives motors 9b and 11b (Fig. 4) such that second vane 4b and second flap 6b each have a predetermined angle of inclination corresponding to direction D2.

Air volume control unit 34 controls volume of air W1 of first airflow B1 and volume of air W2 of second airflow B2. Specifically, air volume control unit 34 calculates a temperature difference ΔT1 (=T1*-T1) between room temperature T1 of room Rlwhich has been detected by room temperature sensor S1 and set temperature T1*, and a temperature difference ΔT2 (=T2*-T2) between room temperature T2 of room R2 which has been detected by room temperature sensor S2 and set temperature T2*. Air volume control unit 34 adjusts volumes of air W1 and W2 based on at least one of the calculated temperature differences ΔT1 and ΔT2. Air volume control unit 34 drives the fan motor to control the speed of rotation of first fan 7a to be equal to the adjusted volume of air W1. Air volume control unit 34 drives the fan motor to control the speed of rotation of second fan 7b to be equal to the adjusted volume of air W2.

Blowing control unit 36 controls the operation of blower 50. Specifically, upon receipt of the operation start instruction of blower 50, blowing control unit 36 starts an operation of blower 50. Control device 58 (Fig. 5) of blower 50 activates blowing fan 51 (Fig. 5) in accordance with an instruction from blowing control unit 36. Contrastingly, upon receipt of the operation stop instruction of blower 50, blowing control unit 36 stops the operation of blower 50. Control device 58 of blower 50 stops blowing fan 51 in accordance with an instruction from blowing control unit 36. The operation start instruction and the operation stop instruction of blower 50 can be provided by the controller.

### [Operation Mode of Air Conditioning System]

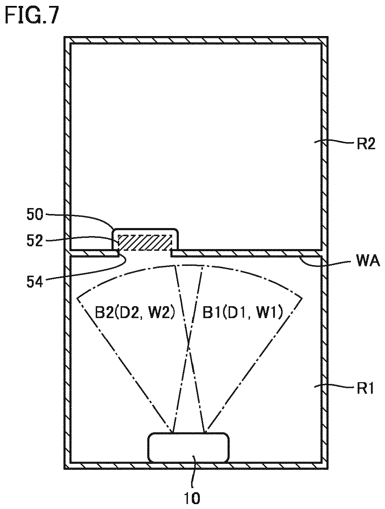

The operation modes of air conditioning system 100 according to Embodiment 1 will now be described with reference to Figs. 7 to 9. Figs. 7 to 9 are schematic diagrams showing how room R1 and room R2 are air-conditioned, viewed from above.

Air conditioning system 100 according to Embodiment 1 can switch its operation mode among a mode of air-conditioning room R1 alone, a mode of air-conditioning room R2 alone, and a mode of air-conditioning room R1 and room R2.

Fig. 7 is a diagram for illustrating the mode of air-conditioning room R1 alone. With reference to Fig. 7, in the mode of air-conditioning room R1 alone, control device 8 (blowing control unit 36) outputs an operation stop instruction to blower 50. Upon receipt of the operation stop instruction, control device 58 of blower 50 stops blowing fan 51.

Air conditioner 1 blows both of airflows B1 and B2 toward room R1. Specifically, control device 8 (wind direction control unit 32) adjusts the angle of inclination of the first wind direction adjusting member (first vane 4a and first flap 6a) such that direction D1 of first airflow B1 is directed to room R1. Wind direction control unit 32 also adjusts the angle of inclination of the second wind direction adjusting member (second vane 4b and second flap 6b) such that direction D2 of second airflow B2 is directed to room R1. Both of directions D1 and D2 are stored in wind direction storage unit 30 in advance.

Control device 8 (air volume control unit 34) adjusts volume of air W1 of first airflow B1 and volume of air W2 of second airflow B2 based on temperature difference ΔT1 between room temperature T1 of room R1 which has been detected by room temperature sensor S1 and set temperature T1*. For example, when temperature difference ΔT1 is greater than a threshold α set in advance, air volume control unit 34 controls the speeds of rotation of blowing fans 7a and 7b such that the sum (=W1+W2) of volume of air W1 and volume of air W2 is equal to the volume of air set by the controller or a volume of air set based on temperature differenceΔT1. At this time, volume of air W1 and volume of air W2 may be equal to or different from each other.

When temperature difference ΔT1 is equal to or smaller than threshold α, air volume control unit 34 controls the speeds of rotation of blowing fans 7a and 7b so as to reduce volumes of air W1 and W2. Herein, "reducing a volume of air" includes a blowing fan stopping blowing airflow (i.e., the volume of air is zero).

Such a configuration enables air conditioning of room R1 using first airflow B1 and second airflow B2 that are blown from outlet 3 of indoor unit 10.

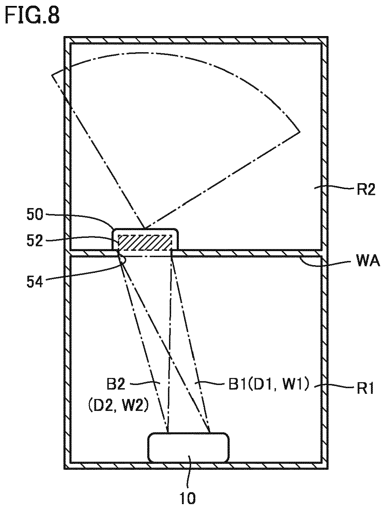

Fig. 8 is a diagram for illustrating the mode of air-conditioning room R2 alone. With reference to Fig. 8, in the mode of air-conditioning room R2 alone, blowing control unit 36 outputs an operation start instruction to blower 50. Upon receipt of the operation start instruction, control device 58 of blower 50 activates blowing fan 51.

Air conditioner 1 blows both of first airflow B1 and second airflow B2 toward communication hole 54. Specifically, wind direction control unit 32 adjusts the angle of inclination of the first wind direction adjusting member such that direction D1 of first airflow B1 is directed to communication hole 54. Wind direction control unit 32 also adjusts the angle of inclination of the second wind direction adjusting member such that direction D2 of second airflow B2 is directed to communication hole 54. Both of directions D1 and D2 are stored in wind direction storage unit 30 in advance.

Air volume control unit 34 adjusts volume of air W1 of first airflow B1 and volume of air W2 of second airflow B2 based on temperature difference ΔT2 between room temperature T2 detected by room temperature sensor S2 and set temperature T2*. For example, when temperature difference ΔT2 is greater than threshold α set in advance, air volume control unit 34 controls the speeds of rotation of blowing fans 7a and 7b such that the sum (=W1+W2) of volume of air W1 and volume of air W2 is equal to the volume of air set by the controller or the volume of air set based on temperature difference ΔT2. At this time, volume of air W1 and volume of air W2 may be equal to or different from each other.

When temperature difference ΔT2 is equal to or smaller than threshold α, air volume control unit 34 controls the speeds of rotation of blowing fans 7a and 7b so as to reduce volumes of air W1 and W2.

Such a configuration enables air conditioning of room R2 using first airflow B1 and second airflow B2 that are blown from outlet 3 of indoor unit 10.

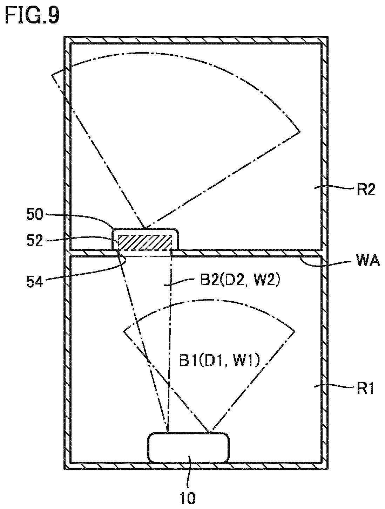

Fig. 9 is a diagram for illustrating the mode of air-conditioning room R1 and room R2. With reference to Fig. 9, in the mode of air-conditioning room R1 and room R2, control device 8 outputs an operation start instruction to blower 50. Upon receipt of the operation start instruction, the control device of blower 50 activates blowing fan 51.

Air conditioner 1 blows first airflow B1 toward room R1 and blows second airflow B2 toward communication hole 54. For example, wind direction control unit 32 adjusts the angle of inclination of the first wind direction adjusting member such that direction D1 of first airflow B1 is directed to room R1. Wind direction control unit 32 further adjusts the angle of inclination of the second wind direction adjusting member such that direction D2 of second airflow B2 is directed to communication hole 54. Both of directions D1 and D2 are stored in wind direction storage unit 30 in advance.

Air volume control unit 34 adjusts volume of air W1 of first airflow B1 and volume of air W2 of second airflow B2 based on temperature differences ΔT1 and ΔT2. For example, when the absolute value (=|ΔT1-ΔT2|) of the difference between temperature differences ΔT1 and ΔT2 is equal to or smaller than a predetermined threshold Tth, air volume control unit 34 causes volume of air W1 and volume of air W2 to be equal to each other. At this time, the volume of air may be set by the controller or set based on temperature difference ΔT1.

When the absolute value is greater than threshold Tth, air volume control unit 34 adjusts volumes of air W1 and W2 in accordance with the relationship of magnitude between temperature differences ΔT1 and ΔT2. Specifically, when temperature difference ΔT1 is greater than temperature difference ΔT2 (ΔT2>ΔT2), air volume control unit 34 increases volume of air W1. Contrastingly, when temperature difference ΔT2 is greater than temperature difference ΔT1 (ΔT2>ΔT1), air volume control unit 34 increases volume of air W2. That is to say, air volume control unit 34 is configured to compare the magnitude between temperature difference ΔT1 of room R1 and temperature difference ΔT2 of room R2 and cause the volume of air of the airflow blown toward a room with a greater temperature difference to be greater than the volume of air of the airflow blown toward a room with a smaller temperature difference.

Air volume control unit 34 controls the speeds of rotation of blowing fans 7a and 7b such that each of volumes of air W1 and W2 is equal to the adjusted volume of air. When temperature difference ΔT1 is equal to or smaller than threshold α, air volume control unit 34 further controls the speed of rotation of first fan 7a to reduce volume of air W1. When temperature differenceΔT2 is equal to or smaller than threshold α, volume control unit 34 controls the speed of rotation of second fan 7b to reduce volume of air W2.

Such a configuration enables air conditioning of room R1 using first airflow B1 blown from outlet 3 of indoor unit 10 and air conditioning of room R2 using second airflow B2.

### [Air Volume Control and Wind Direction Control of Air Conditioner]

Air volume control and wind direction control of an airflow blown from air conditioner 1 will now be described.

### (1) Air Volume Control

Air volume control performed by control device 8 of air conditioner 1 will be described first.

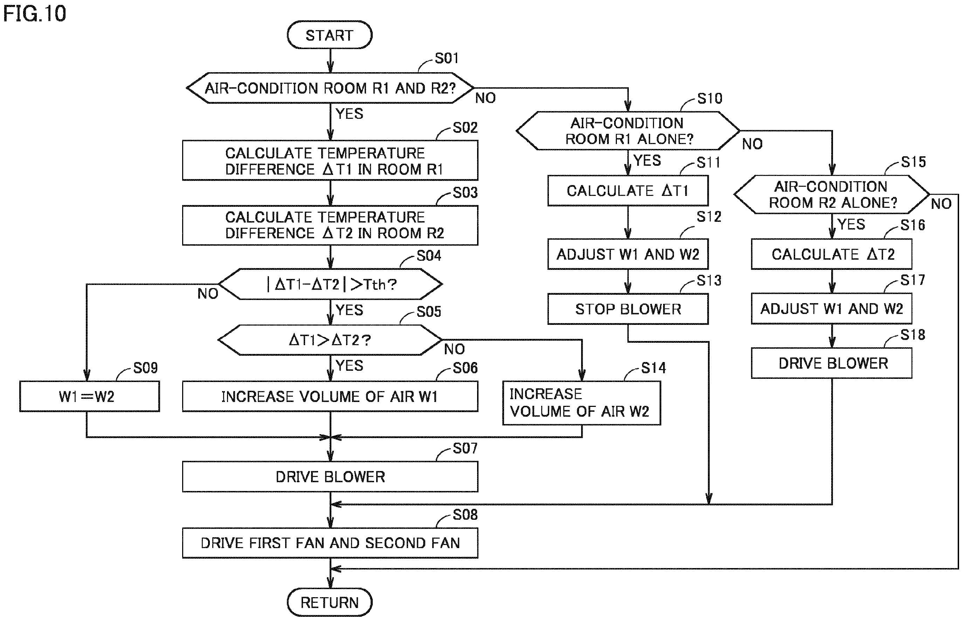

Fig. 10 is a flowchart illustrating an example of air volume control of airflows B1 and B2 blown from air conditioner 1. The flowchart shown in Fig. 10 is repeatedly performed in control device 8.

With reference to Fig. 10, at step S01, control device 8 determines whether the operation mode of air conditioning system 100 is the mode of air-conditioning room R1 and room R2 (see Fig. 9).

When the operation mode of air conditioning system 100 is the mode of air-conditioning room R1 and room R2 (determined YES at S01), at step S02, control device 8 calculates temperature difference ΔT1 between room temperature T1 of room R1 which has been detected by room temperature sensor S1 and set temperature T1*. At step S03, control device 8 further calculates temperature difference ΔT2 between room temperature T2 of room R2 which has been detected by room temperature sensor S2 and set temperature T2*.

Control device 8 then compares the magnitude between temperature difference ΔT1 in room R1 and temperature difference ΔT2 in room R2. Specifically, at step S04, control device 8 calculates the absolute value (=|ΔT1-ΔT2|) of the difference between temperature difference ΔT1 and temperature difference ΔT2, and compares the calculated absolute value of the difference and the predetermined threshold Tth. When the absolute value of the difference is equal to or smaller than the predetermined threshold Tth (determined NO at S04), control device 8 proceeds to step S09 to cause volume of air W1 and volume of air W2 to be equal to each other. At step S09, a volume of air may be set by the controller, or a volume of air may be set based on temperature difference ΔT1.

Contrastingly, when the absolute value of the difference is greater than the predetermined threshold Tth (determined YES at S04), control device 8 proceeds to step S05 to determine whether temperature difference ΔT1 is greater than temperature difference ΔT2. When temperature difference ΔT1 is greater than temperature difference ΔT2 (determined YES at S05), at step S06, control device 8 increases volume of air W1. Contrastingly, when temperature difference ΔT2 is greater than temperature difference ΔT1 (determined NO at S05), control device 8 increases volume of air W2 at step S14. Step S07, control device 8 further outputs an operation start instruction to blower 50 to drive blower 50.

At step S08, control device 8 drives first fan 7a such that volume of air W1 is equal to the volume of air adjusted at step S06 or S09. Control device 8 also drives second fan 7b such that volume of air W2 is equal to the volume of air adjusted at step S09 or S14.

Returning back to step S01, when the operation mode of air conditioning system 100 is not the mode of air-conditioning room R1 and room R2 (determined NO at S01), control device 8 proceeds to step S10 to determine whether the operation mode is the mode of air-conditioning room R1 alone (see Fig. 7).

When determining that the operation mode is the mode of air-conditioning room R1 alone (determined YES at S10), control device 8 calculates temperature difference ΔT1 in room R1 at step S11 and then proceeds to step S12 to adjust volumes of air W1 and W2 based on the calculated temperature difference ΔT1. As described with reference to Fig. 7, when temperature difference ΔT1 is greater than threshold α, control device 8 adjusts volumes of air W1 and W2 such that the sum of volume of air W1 and volume of air W2 is equal to a set volume of air.

At step S13, control device 8 outputs an operation stop instruction to blower 50 to stop blower 50, and then proceeds to step S08 to drive blowing fans 7a and 7b such that volumes of air W1 and W2 are equal to the volumes of air adjusted at step S12.

Contrastingly, when determining that the operation mode is not the mode of air-conditioning room R1 alone at step S10 (determined NO at S10), control device 8 proceeds to step S15 to determine whether the operation mode is the mode of air-conditioning room R2 alone (see Fig. 8). When the operation mode is the mode of air-conditioning room R2 alone (determined YES at S15), at step S16, control device 8 calculates temperature difference ΔT2 in room R2. Control device 8 further proceeds to step S17 to adjust volumes of air W1 and W2 based on the calculated temperature difference ΔT2. As described with reference to Fig. 8, when temperature difference ΔT2 is greater than threshold α, control device 8 adjusts volumes of air W1 and W2 such that the sum of volume of air W1 and volume of air W2 is equal to a set volume of air.

At step S18, control device 8 outputs the operation start instruction to blower 50 to drive blower 50, and then proceeds to step S08 to drive blowing fans 7a and 7b such that volumes of air W1 and W2 are equal to the volumes of air adjusted at step S17.

### (2) Wind Direction Control

Wind direction control performed by control device 8 of air conditioner 1 will now be described.

As described above, direction D1 of first airflow B1 and direction D2 of second airflow B2 are set per operation mode of air conditioning system 100 and are stored in wind direction storage unit 30. As to the mode of air-conditioning room R2 alone (see Fig. 8) or the mode of air-conditioning room R1 and room R2 (see Fig. 9), the direction of at least one of first airflow B1 and second airflow B2 is set to be directed to communication hole 54. As to the direction for blowing air toward communication hole 54, air conditioner 1 can have a learning function of automatically learning an optimum wind direction. This function enables adjustment to an optimum wind direction without manual operation.

Learning of a wind direction which is performed by air conditioner 1 will now be described as a first configuration example of wind direction control.

### [First Configuration Example of Wind Direction Control]

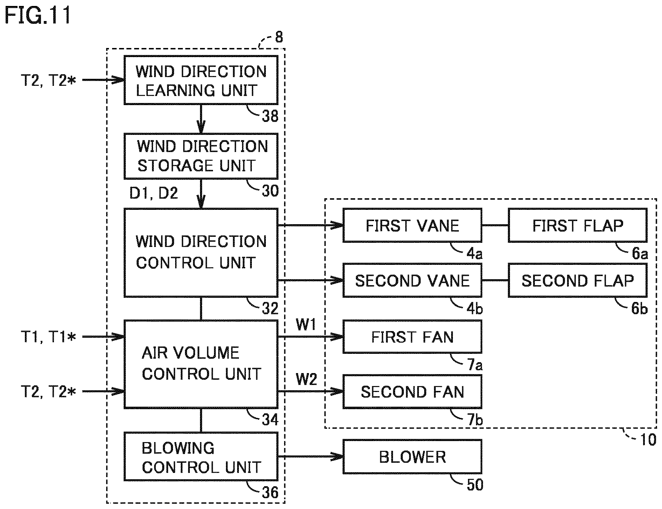

Fig. 11 is a functional block diagram showing the first configuration example of control device 8. Control device 8 shown in Fig. 11 is different from control device 8 shown in Fig. 6 described above in that it includes a wind direction learning unit 38. The other configuration of control device 8 shown in Fig. 11 is identical to that of control device 8 shown in Fig. 6, detailed description of which will not be repeated.

Wind direction learning unit 38 performs learning for directing each of direction D1 of first airflow B1 and direction D2 of second airflow B2 to communication hole 54. This learning can be performed, for example, during test operation or initial operation of air conditioning system 100. Alternatively, learning may be performed during idle operation in which air conditioning system 100 does not air-condition rooms R1 and R2, in addition to during test operation and initial operation. Periodical learning can update the direction directed to communication hole 54. Consequently, the accuracy of wind direction control can be maintained.

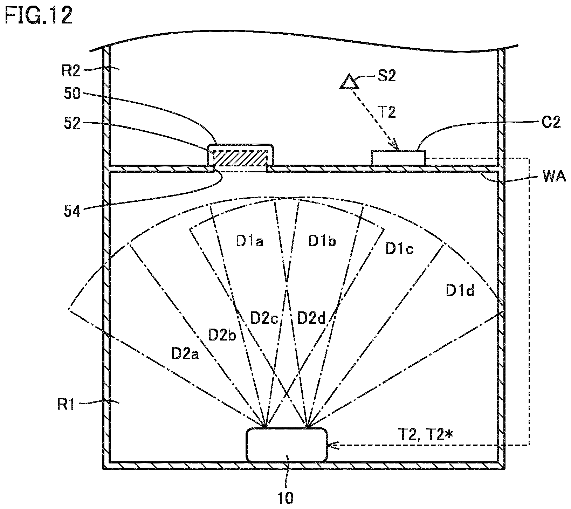

Fig. 12 is a diagram for illustrating a blowing direction learning process by wind direction learning unit 38. Fig. 12 is a schematic diagram showing how room R2 is air-conditioned, viewed from above.

With reference to Fig. 12, air conditioner 1 can change direction D1 of first airflow B1 among a plurality of directions from left to right. In the example of Fig. 12, direction D1 can be changed among four directions D1a to D1d. Air conditioner 1 can change direction D2 of second airflow B2 among a plurality of directions from left to right. In the example of Fig. 12, direction D2 can be changed among four directions D2a to D2d.

Wind direction learning unit 38 learns an optimum wind direction directed to communication hole 54 from among the four directions for each of first airflow B1 and second airflow B2. Specifically, for first airflow B1, wind direction learning unit 38 first receives room temperature T2 of room R2 before air conditioning which has been detected by room temperature sensor S2 (hereinafter, also referred as an initial temperature) and set temperature T2* from controller C2. Wind direction learning unit 38 then sets direction D1 of first airflow B1 to D1a, and subsequently drives air conditioner 1 (compressor 28, throttle device 14, and first fan 7a) and blower 50 to start air conditioning of room R2. Volume of air W1 of first airflow B1 at this time is fixed to a preset value. In contrast, volume of air W2 of second airflow B2 is set to zero by stopping the operation of second fan 7b.

During air conditioning, wind direction learning unit 38 receives room temperature T2 detected by room temperature sensor T2 from controller C2. Wind direction learning unit 38 measures a period of time (hereinafter, also referred to as "set temperature arrival time") from start of air conditioning of room R2 to arrival of room temperature T2 to set temperature T2*.

When measuring the set temperature arrival time in which direction D1 of first airflow B1 is D1a, wind direction learning unit 38 stops the operations of air conditioner 1 and blower 50 to stop air conditioning of room R2. When room temperature T2 returns to the initial temperature after stopping air conditioning, wind direction learning unit 38 switches direction D1 to D1b to restart air conditioning of room R2. Volume of air W1 of first airflow B1 at this time is fixed to the same value as that of the volume of air in the last air conditioning. During air conditioning, wind direction learning unit 38 measures a set temperature arrival time based on room temperature T2 transmitted from controller C2.

When measuring the set temperature arrival time in which direction D1 is D1b, wind direction learning unit 38 stops air conditioning of room R2. When room temperature T2 of room R2 returns to the initial temperature, wind direction learning unit 38 switches direction D1 to D1c to restart air conditioning of room R2. During air conditioning, wind direction learning unit 38 measures a set temperature arrival time based on room temperature T2 transmitted from controller C2.

When measuring the set temperature arrival time in which direction D1 is D1c, wind direction learning unit 38 stops air conditioning of room R2. When room temperature T2 of room R2 returns to the initial temperature, wind direction learning unit 38 switches direction D1 to D1d to restart air conditioning of room R2. During air conditioning, wind direction learning unit 38 measures the set temperature arrival time based on room temperature T2 transmitted from controller C2.

For first airflow B1, wind direction learning unit 38 measures the set temperature arrival time of each of directions D1a to D1d in this manner. During measurement, volume of air W1 of first airflow B1 is a fixed value, and volume of air W2 of second airflow B2 is zero.

When measuring the set temperature arrival time for first airflow B1, also for second airflow B2, wind direction learning unit 38 measures the set temperature arrival time for each of directions D2a to D2b using the method similar to that for first airflow B1. During measurement, volume of air W2 of second airflow B2 is a fixed value, and volume of air W1 of first airflow B1 is zero. The fixed value of volume of air W2 is the same value as the fixed value of volume of air W1 described above.

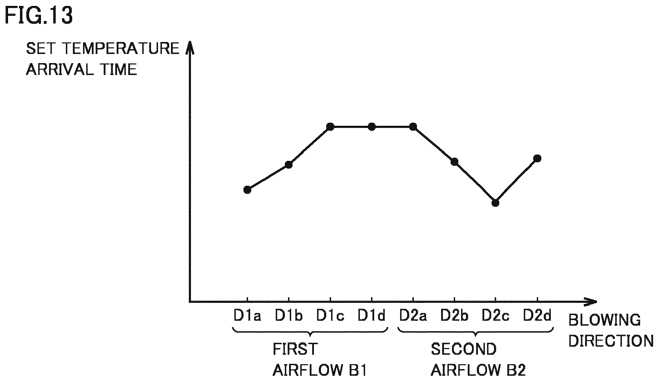

Fig. 13 is a diagram illustrating an example of the relationship between the direction of airflow B1, B2 and the set temperature arrival time. In Fig. 13, the horizontal axis represents directions D1a to D1d of first airflow B1 and directions D2a to D2d of second airflow B2, and the vertical axis represents a measurement result of the set temperature arrival time.

With reference to Fig. 13, for first airflow B1, the set temperature arrival time is shortest in direction D1a. Consequently, it can be determined that direction D1a is the optimum wind direction in which first airflow B1 is directed to communication hole 54. For second airflow B2, the set temperature arrival time is shortest in direction D2c. Consequently, it can be determined that direction D2c is the optimum wind direction in which second airflow B2 is directed to communication hole 54.

Comparison of set temperature arrival time between direction D1a and direction D2c reveals that the set temperature arrival time is shorter in direction D2c than in direction D1a. Consequently, it can be determined that an airflow blown from indoor unit 10 can be blown toward communication hole 54 most effectively by adjusting direction D2 of second airflow B2 to D2c.

Wind direction learning unit 38 learns, based on the relationship shown in Fig. 13, the optimum wind direction directed to communication hole 54 in the mode of air-conditioning room R2 alone, and stores the learning result in wind direction storage unit 30. In the example of Fig. 13, direction D1a and direction D2c are stored to direct both of airflows B1 and B2 to communication hole 54.

Wind direction learning unit 38 also learns an optimum wind direction toward communication hole 54 in the mode of air-conditioning room R1 and room R2, and stores the learning result in wind direction storage unit 30. In the example of Fig. 13, direction D2c in which the set temperature arrival time is shortest is stored. That is to say, second airflow B2 is used for air conditioning of room R2 with its direction adjusted to D2c, and first airflow B1 is used for air conditioning of room R1. For direction D1 of first airflow B1, directions D1a to D1d may be stored in wind direction storage unit 30. This allows switching of direction D1 of first airflow B1 among directions D1a to D1d during air conditioning of room R1.

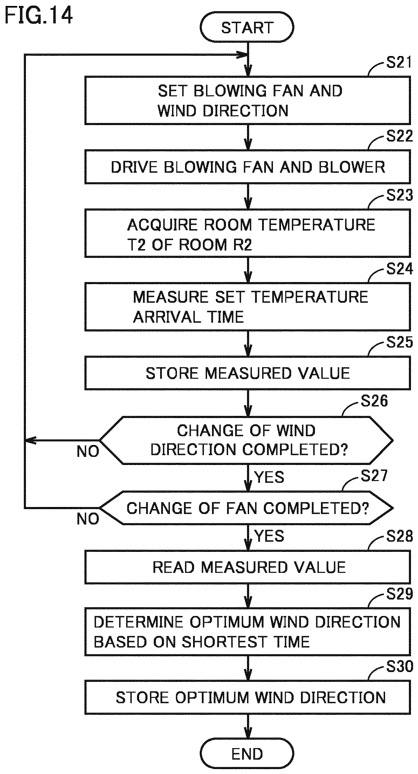

Fig. 14 is a flowchart illustrating a procedure of a blowing direction learning process by wind direction learning unit 38.

With reference to Fig. 14, at step S21, wind direction learning unit 38 sets a blowing fan that is caused to generate an airflow and the direction of the airflow. In the example of Fig. 12, wind direction learning unit 38 selects any one of blowing fans 7a and 7b and also selects the direction of an airflow from among a plurality of directions possessed by the selected blowing fan.

At step S22, wind direction learning unit 38 drives the blowing fan set at step S21 to generate an airflow, and also drives blower 50 to introduce the airflow that has passed through communication hole 54 into room R2. At this time, wind direction learning unit 38 controls the wind direction adjusting member to adjust the direction of the airflow blown from outlet 3 of indoor unit 10 to the direction set at step S21.

During air conditioning of room R2, at step S23, wind direction learning unit 38 acquires room temperature T2 of room R2 detected by room temperature sensor S2 via controller C2. Wind direction learning unit 38 proceeds to step S24 to measure the set temperature arrival time based on the acquired room temperature T2. At step S25, wind direction learning unit 38 stores the measured value of the set temperature arrival time in an internal storage area in association with the direction of the airflow.

At step S26, for a plurality of wind directions possessed by the blowing fan which has been set at S21, wind direction learning unit 38 determines whether change of the wind direction has been completed. When a measurement value of the set temperature arrival time has not been acquired for at least one of the plurality of wind directions (determined NO at S26), wind direction learning unit 38 determines that the change of the wind direction has not been completed. In this case, wind direction learning unit 38 returns the process to step S21 to set the wind direction of the blowing fan which has been set at step S21 to a wind direction for which the set temperature arrival time has not been measured. Wind direction learning unit 38 performs the processes of steps S22 to S25 to acquire the measurement value of the set temperature arrival time for the set wind direction.

Contrastingly, when the measurement value of the set temperature arrival time has been acquired for all of the plurality of wind directions possessed by the blowing fan which has been set at step S21 (determined YES at S26), wind direction learning unit 38 determines that change of the wind direction has been completed. At step S27, wind direction learning unit 38 subsequently determines whether change of the blowing fan has been completed. When any one of blowing fans 7a and 7b has not been selected at step S21 (determined NO at S27), wind direction learning unit 38 returns the process to step S21 to switch the setting of the blowing fan. Wind direction learning unit 38 further selects the direction of an airflow from among a plurality of wind directions possessed by a blowing fan newly set. Wind direction learning unit 38 performs the processes of steps S22 to S25 to acquire the measurement value of the set temperature arrival time for each of the plurality of wind directions possessed by the blowing fan.

Contrastingly, when the measurement value of the set temperature arrival time has been acquired for all of the plurality of wind directions for each of blowing fans 7a and 7b (determined YES at S27), wind direction learning unit 38 determines that change of the blowing fan has been completed. Wind direction learning unit 38 proceeds to step S28 to read the measurement values of the plurality of set temperature arrival times from the storage area, and subsequently at step S29, determines an optimum wind direction per blowing fan based on the shortest one of the plurality of set temperature arrival times. At step S30, wind direction learning unit 38 stores the determined optimum wind direction per blowing fan in wind direction storage unit 30.

In the configuration in which first airflow B1 from indoor unit 10 is blown toward room R1 and second airflow B2 is blown toward communication hole 54, the air conditioning system according to Embodiment 1 can adjust the wind direction and the volume of air of each of first airflow B1 and second airflow B2 independently of each other to air condition room R1 and room R2 independently of each other.

This achieves comfort of occupant M1 in room R1 together with comfort of occupant M2 in room R2. Also, air conditioner 1 can blow second airflow B2 toward communication hole 54 to air-condition room R2 without air conditioning of room R1, thereby improving air conditioning efficiency by air conditioning system 100.

### [Embodiment 2 of the invention]

Embodiment 2 will describe another configuration example of wind direction control performed by control device 8 of air conditioner 1.

First, a configuration in which the user initially inputs an optimum wind direction for blowing toward communication hole 54 will be described as a second configuration example of wind direction control. Next, a configuration in which air conditioner 1 detects the position of communication hole 54 on wall WA to derive an optimum wind direction will be described as a third configuration example of wind direction control.

### [Second Configuration Example of Wind Direction Control]

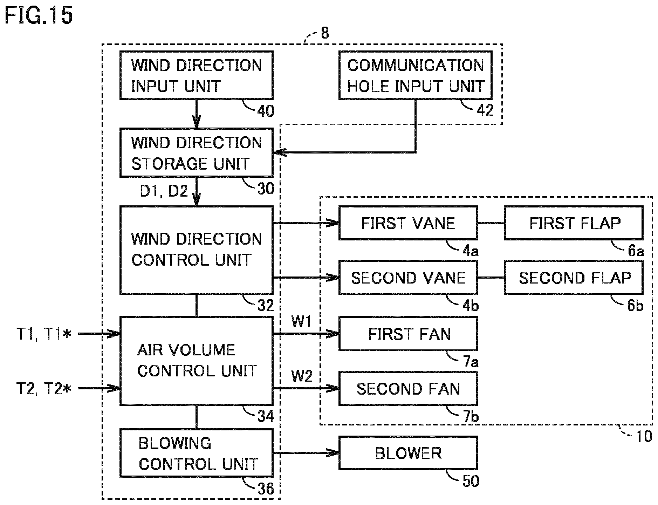

Fig. 15 is a functional block diagram showing the second configuration example of wind direction control in control device 8. Control device 8 shown in Fig. 15 is different from control device 8 shown in Fig. 6 described above in that it includes a wind direction input unit 40 and a communication hole input unit 42. The other configuration of control device 8 is similar to that of control device 8 shown in Fig. 6, detailed description of which will not be repeated.

With reference to Fig. 15, wind direction input unit 40 is configured to receive user's input relating to the direction directed to communication hole 54 for each of airflows B1 and B2. Communication hole input unit 42 is configured to receive user's input relating to classification of communication holes. "Classification of communication holes" shows a communication hole communicating which room with room R1 with air conditioner 1 placed therein. In the example of Fig. 1, a signal indicating that communication hole 54 is a communication hole for communicating room R1 with room R2 is input to communication hole input unit 42.

Upon receipt of user's operation inputs relating to the blowing direction and the classification of communication holes, the controller provides a signal relating to the received operation to wind direction input unit 40 and communication hole input unit 42. Wind direction input unit 40 and communication hole input unit 42 store direction D1 of first airflow B1 and direction D2 of second airflow B2 in wind direction storage unit 30 based on the signal provided from the controller.

In the second configuration example, the relationship between a communication hole and an optimum wind direction can be stored through initial input. Air conditioner 1 can accordingly blow airflow toward a communication hole without an operation for learning an optimum wind direction.

The combination of the first configuration example and the second configuration example described above can maintain the accuracy of wind direction control. For example, the learning of a wind direction may be performed to update a wind direction directed to a communication hole when air conditioning system 100 is during standby.

### [Third Configuration Example of Wind Direction Control]

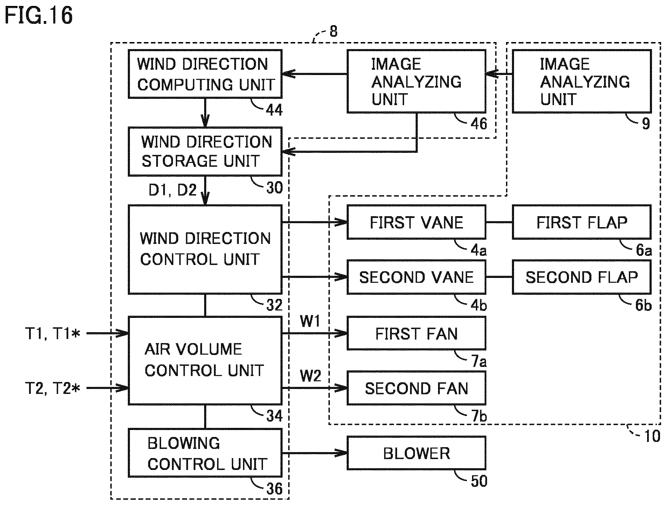

Fig. 16 is a functional block diagram showing the third configuration example of wind direction control in control device 8. Control device 8 shown in Fig. 16 is different from control device 8 shown in Fig. 6 described above in that it includes a wind direction computing unit 44 and an image analyzing unit 46. The other configuration of control device 8 is similar to that of control device 8 shown in Fig. 6, detailed description of which will not be repeated.

With reference to Fig. 16, air conditioner 1 includes an imaging unit 9. Imaging unit 9 is placed in indoor unit 10. Imaging unit 9 is disposed, for example, on the front of the body of indoor unit 10. Imaging unit 9 can take an image of the interior of room R1. Imaging unit 9 includes, for example, a wide-angle lens capable of imaging at a sufficiently wide viewing angle by one imaging operation, and can acquire an image of the entire interior of the room by one imaging operation. Alternatively, imaging unit 9 includes a rotatable lens, and can perform imaging by rotating the lens by every predetermined angle to acquire an image of the entire interior of the room by multiple imaging operations. Imaging unit 9 outputs the taken image of the interior of the room to image analyzing unit 46.

Image analyzing unit 46 detects the position of communication hole 54 in room R1 based on the image taken by imaging unit 9. Image analyzing unit 46 performs a well known image analyzing process on the image data to detect the position of communication hole 54 on wall WA.

Wind direction computing unit 44 computes an optimum wind direction in which airflow B1 is directed to communication hole 54 and an optimum wind direction in which airflow B2 is directed to communication hole 54, based on the position of communication hole 54 detected by image analyzing unit 46. Wind direction computing unit 44 stores the computation result in wind direction storage unit 30 as an optimum wind direction directed to communication hole 54 in the mode of air-conditioning room R2 alone.

Wind direction computing unit 44 further computes an optimum wind direction directed to communication hole 54 in the mode of air-conditioning room R1 and room R2, based on the detected position of communication hole 54. Specifically, wind direction computing unit 44 determines which of airflows B1 and B2 to blow airflow toward communication hole 54, based on the positional relationship between outlet 3 of indoor unit 10 and communication hole 54. Wind direction computing unit 44 stores the optimum wind direction for the determined airflow in wind direction storage unit 30 as an optimum wind direction directed to communication hole 54 in the mode of air-conditioning room R1 and room R2.

In the third configuration example, the relationship between a communication hole and an optimum wind direction can be automatically stored at the initial time of the operation of air conditioner 1. This allows airflow to be blown toward the communication hole without an operation for learning an optimum wind direction.

### [Embodiment 3 of the invention]

Embodiment 3 will describe another configuration example of air volume control performed by control device 8 of air conditioner 1.

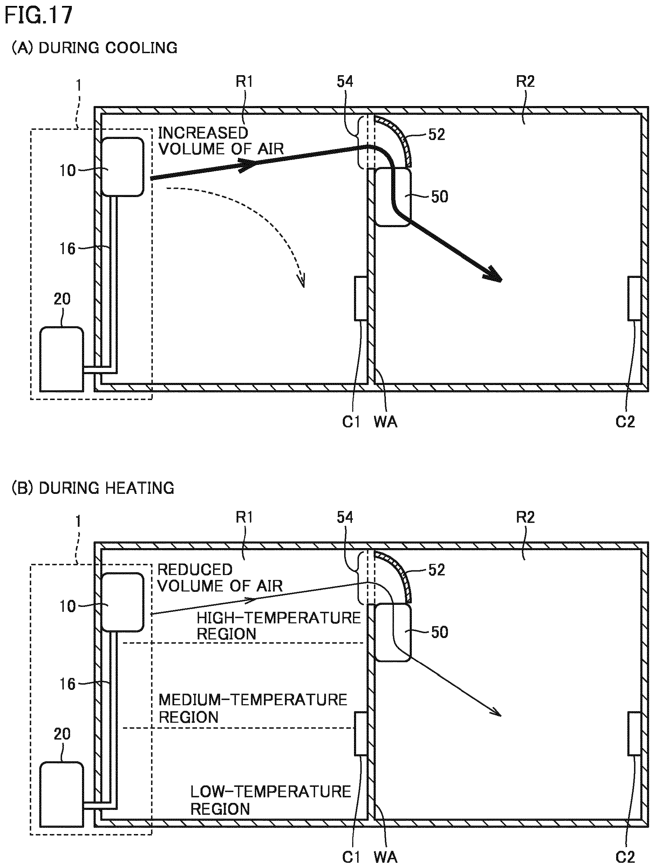

Fig. 17(A) is a diagram illustrating air volume control in cooling of room R2. The air volume control shown in Fig. 17(A) can be performed in the mode of air-conditioning (cooling) room R1 and room R2 and the mode of air-conditioning (cooling) room R2 alone.

In cooling of room R2, cold air is blown from outlet 3 of indoor unit 10 toward communication hole 54. In control device 8, air volume control unit 34 adjusts the volume of the cold air blown toward communication hole 54. Air volume control unit 34 causes the volume of the cold air blown toward communication hole 54 to be greater than a preset volume of air. The preset volume of air is a volume of air set based on temperature difference ΔT2 between room temperature T2 of room R2 which has been detected by room temperature sensor S2 (not shown) and set temperature T2*, or a volume of air set by the controller.

In room R1, the cold air blown from outlet 3 of indoor unit 10 has a density higher than that of the indoor air, and is more likely to flow toward the lower portion of the room. When the volume of the cold air that reaches communication hole 54 deceases, accordingly, the volume of cold air introduced into room R2 also decreases, which makes efficient air conditioning of room R2 difficult.

In Embodiment 3, the volume of cold air that reaches communication hole 54 is increased by causing the volume of cold air blown toward communication hole 54 to be greater than the set volume of air, as shown in Fig. 17(A). Efficient blowing of cold air toward communication hole 54 can prevent a decrease in the volume of cold air introduced into room R2, thus efficiently cooling room R2.

Specifically, in the mode of air-conditioning room R2 alone, air volume control unit 34 causes the sum of volume of air W1 of first airflow B1 and volume of air W2 of second airflow B2 to be greater the set volume of air. An amount of increase from the set volume of air may be constant or correspond to temperature difference ΔT2. For example, the amount of increase may be reduced as temperature difference ΔT2 decreases.

Fig. 17(B) is a diagram illustrating air volume control in heating of room R2. The air volume control shown in Fig. 17(B) can be performed in the mode of air conditioning (heating) room R2 alone.

In heating of room R2, warm air is blown from outlet 3 of indoor unit 10 toward communication hole 54. Air volume control unit 34 adjusts the volume of the warm air blown toward communication hole 54. Air volume control unit 34 causes the volume of warm air blown toward communication hole 54 to be smaller than a preset volume of air. The preset volume of air is a volume of air set based on temperature difference ΔT2 between room temperature T2 of room R2 which has been detected by room temperature sensor S2 (not shown) and set temperature T2*, or a volume of air set by the controller.

In room R2, the warm air blown from outlet 3 of indoor unit 10 has a density lower than that of indoor air, and accordingly, is more likely to stay at the upper portion of the room. In room R1, thus, thermal stratification is formed in which air temperature becomes lower from the ceiling toward the floor. That is to say, a high-temperature region is formed at a higher location at which communication hole 54 is located.

In air conditioning system 100 according to Embodiment 3, the volume of warm air blown toward communication hole 54 is caused to be smaller than a set volume of air to suppress convention of air in room R1, as shown in Fig 17(B). That is to say, a high-temperature region is formed aggressively in room R1. Consequently, warm air is effectively blown toward communication hole 54 located at a higher location, thus enabling efficient heating of room R2.

Specifically, in the mode of air-conditioning room R2 alone, air volume control unit 34 causes the sum of volume of air W1 of first airflow B1 and volume of air W2 of second airflow B2 to be smaller than the set volume of air. A reduction amount from the set volume of air may be constant or correspond to temperature difference ΔT2. For example, a reduction amount may be reduced as temperature difference ΔT2 decreases.

### [Embodiment 4 of the invention]

Embodiment 4 will describe a configuration example of operation control of air conditioner 1 and blower 50 for air-conditioning room R2.

First, a configuration in which the operations of air conditioner 1 and blower 50 are controlled by detecting the presence or absence of an occupant in room R2 will be described as a first configuration example of operation control. Next, a configuration in which the operations of air conditioner 1 and blower 50 are controlled based on an operator's input relating to an expected entrance/exit time to/from room R2 will be described as a second configuration example of operation control.

### [First Configuration Example of Operation Control]

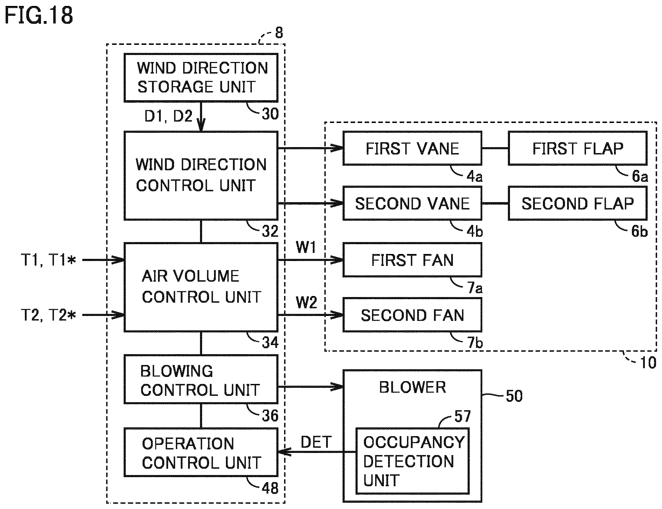

Fig. 18 is a functional block diagram showing the first configuration example of operation control in control device 8. Control device 8 shown in Fig. 18 is different from control device 8 shown in Fig. 6 in that it includes an operation control unit 48. The other configuration of control device 8 is similar to that of control device 8 shown in Fig. 6, detailed description of which will not be repeated.

With reference to Fig. 18, blower 50 includes an occupancy detection unit 57. Occupancy detection unit 57 detects the presence or absence of an occupant in room R2. Occupancy detection unit 57 is configured of, for example, a human sensor such as an infrared sensor that detects the presence or absence of a person by detecting infrared rays emitted from a human body. Alternatively, occupancy detection unit 57 may be configured to detect a human body from an image acquired from the imaging unit that takes an image of the interior of room R2. The imaging unit is disposed, for example, on the front of the body of blower 50. Occupancy detection unit 57 may be placed in blower 50 or controller C2.

Upon detection of the occupant in room R2, occupancy detection unit 57 outputs a detection signal DET activated to H (logically high) level to operation control unit 48. Upon detection of the absence of a person in room R2 after the occupant has left room R2, occupancy detection unit 57 outputs a detection signal DET activated to L (logically low) level to operation control unit 48.

Operation control unit 48 controls the operations of air conditioner 1 and blower 50 based on the detection signal DET provided from occupancy detection unit 57.

Specifically, in the mode of air-conditioning room R2 alone, upon receipt of a detection signal DET of H level from occupancy detection unit 57, operation control unit 48 activates air conditioner 1 and blower 50. Operation control unit 48 operates compressor 28, heat exchangers 12 and 22, and throttle device 14, and also outputs an operation instruction to wind direction control unit 32 and air volume control unit 34.

Upon receipt of the operation instruction from operation control unit 48, wind direction control unit 32 adjusts the angle of inclination of the first wind direction adjusting member based on direction D1 read from wind direction storage unit 30 such that direction D1 of first airflow B1 is directed to communication hole 54. Wind direction control unit 32 also adjusts the angle of inclination of the second wind direction adjusting member based on direction D2 read from wind direction storage unit 30 such that direction D2 of second airflow B2 is directed to communication hole 54.

Upon receipt of the operation instruction, air volume control unit 34 adjusts volume of air W1 of first airflow B1 and volume of air W2 of second airflow B2 based on temperature difference ΔT2 between room temperature T2 detected by room temperature sensor S2 and set temperature T2*. Upon receipt of the operation start instruction from operation control unit 48, blowing control unit 36 activates blower 50.

Contrastingly, upon receipt of detection signal DET of L level from occupancy detection unit 57, operation control unit 48 stops the operations of air conditioner 1 and blower 50. Operation control unit 48 stops the operations of compressor 28, heat exchangers 12 and 22, and throttle device 14, and also outputs an operation stop instruction to wind direction control unit 32 and air volume control unit 34.

Upon receipt of the operation stop instruction from operation control unit 48, wind direction control unit 32 returns the angle of inclination of each of the first wind direction adjusting member and the second wind direction adjusting member to a predetermined default. Upon receipt of the operation stop instruction, air volume control unit 34 stops the operations of blowing fans 7a and 7b. Operation control unit 48 further outputs the operation stop instruction to blowing control unit 36 to stop the operation of blower 50.

Contrastingly, in the mode of air-conditioning room R1 and room R2, operation control unit 48 controls the operations of air conditioner 1 and blower 50 to air-condition room R1 and room R2 in the presence of a person in room R2 and air-condition room R1 alone in the absence of a person in room R2.

Specifically, upon receipt of detection signal DET of H level from occupancy detection unit 57, operation control unit 48 outputs a switch instruction to wind direction control unit 32 and air volume control unit 34.

Upon receipt of the switch instruction from operation control unit 48, wind direction control unit 32 changes direction D2 of second airflow B2 from the direction directed to room R1 to the direction directed to communication hole 54.

Upon receipt of the switch instruction from operation control unit 48, air volume control unit 34 changes volume of air W1 of first airflow B1 and volume of air W2 of second airflow B2. Specifically, air volume control unit 34 adjusts volume of air W2 of second airflow B2 based on temperature difference ΔT2 in place of temperature difference ΔT1.

Operation control unit 48 further outputs an operation start instruction to blowing control unit 36 to activate blower 50.

Contrastingly, upon receipt of detection signal DET of L level from occupancy detection unit 57, operation control unit 48 outputs an operation stop instruction to blowing control unit 36 to stop the operation of blower 50. Operation control unit 48 further outputs a switch instruction to wind direction control unit 32 and air volume control unit 34.

Upon receipt of the switch instruction from operation control unit 48, wind direction control unit 32 adjusts the angle of inclination of the second wind direction adjusting member such that direction D2 of second airflow B2 is directed to room R1. Upon receipt of the switch instruction, air volume control unit 34 adjusts volume of air W2 of second airflow B2 based on temperature difference ΔT1 in place of temperature difference ΔT2. Consequently, the mode of air-conditioning room R1 alone is achieved in the absence of a person in room R2.

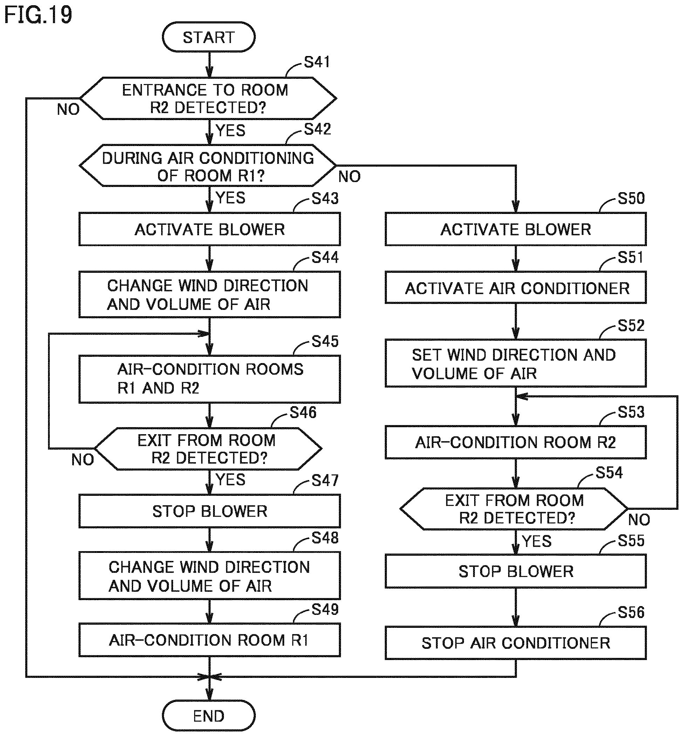

Fig. 19 is a flowchart illustrating the first configuration example of operation control in control device 8. The flowchart shown in Fig. 19 is repeatedly performed in control device 8.

With reference to Fig. 19, at step S41, control device 8 detects whether a person has entered room R2. When a person has not entered room R2 (determined NO at S41), control device 8 ends the process. Contrastingly, when detecting that a person has entered room R2 (determined YES at S41), control device 8 proceeds to step S42 to determine whether air conditioning system 100 is air-conditioning room R1. When air conditioner 1 is air-conditioning room R1 (determined YES at S42), at step S43, control device 8 outputs an operation start instruction to blower 50 to activate blower 50. At step S44, control device 8 subsequently changes directions D1 and D2 and volumes of air W1 and W2 of airflows B1 and B2 which are blown from outlet 3 of indoor unit 10. Specifically, control device 8 blows first airflow B1 from indoor unit 10 toward room R1 and blows second airflow B2 toward communication hole 54. Control device 8 adjusts volume of air W1 of first airflow B1 and volume of air W2 of second airflow B2 based on the relationship of magnitude between temperature difference ΔT1 in room R1 and temperature difference ΔT2 in room R2. At step S45, air conditioning system 100 accordingly shifts from the state of air-conditioning room R1 alone to the state of air-conditioning room R1 and room R2.

In the state of air-conditioning room R1 and room R2, at step S46, control device 8 detects whether the person has left room R2. When the person has not left room R2 (determined NO at S46), control device 8 returns to step S45 to air-condition room R1 and room R2.

Contrastingly, when detecting that the person has left room R2 (determined YES at S46), control device 8 proceeds to step S47 to output an operation stop instruction to blower 50, thereby stopping the operation of blower 50. At step S48, control device 8 further changes directions D1 and D2 and volumes of air W1 and W2 of airflows B1 and B2 which are blown from outlet 3 of indoor unit 10. Specifically, control device 8 blows both of first airflow B1 and second airflow B2 from indoor unit 10 toward room R1. At this time, control device 8 adjusts volume of air W1 of first airflow B1 and volume of air W2 of second airflow B2 based on temperature difference ΔT1 in room R1. Consequently, at step S49, air conditioning system 100 shifts from the state of air-conditioning room R1 and room R2 to the state of air-conditioning room R1 alone.

Returning back to step S42, when air conditioning system 100 is not air-conditioning room R1 (determined NO at S42), control device 8 proceeds to step S50 to output an operation start instruction to blower 50, thereby activating blower 50. At step S51, control device 8 further activates air conditioner 1. At step S52, control device 8 sets directions D1 and D2 and volumes of air W1 and W2 of airflows B1 and B2 which are sent from outlet 3 of indoor unit 10. Specifically, control device 8 blows first airflow B1 and second airflow B2 from indoor unit 10 toward communication hole 54. Control device 8 also adjusts volume of air W1 of first airflow B1 and volume of air W2 of second airflow B2 based on temperature difference ΔT2 in room R2. Consequently, at step S53, the operation mode of air conditioning system 100 is shifted from the state of air conditioning neither room R1 nor room R2 to the state of air-conditioning room R2 alone.

During air conditioning of room R2 alone, at step S54, control device 8 detects whether the person has left room R2. When the person has not left room R2 (determined NO at S54), control device 8 returns to step S53 to air-condition room R2 alone. Contrastingly, when detecting that the person has left room R2 (determined YES at S54), control device 8 proceeds to step S55 to output an operation stop instruction to blower 50, thereby stopping the operation of blower 50. At step S56, control device 8 further stops the operation of air conditioner 1. Consequently, air conditioning system 100 shifts from the state of air-conditioning room R2 alone to the state of air conditioning neither room R1 nor room R2.

In the first configuration example of operation control, in the mode of air-conditioning room R1 and room R2, blower 50 is driven in the presence of a person in room R2 and stops the operation of blower 50 in the absence of a person in room R2. In the mode of air-conditioning room R2 alone, air conditioner 1 and blower 50 are driven in the presence of a person in room R2 and stops the operations of air conditioner 1 and blower 50 in the absence of a person in room R2. Consequently, unnecessary power consumption when air conditioning of room R2 is not required can be reduced.

### [Second Configuration Example of Operation Control]

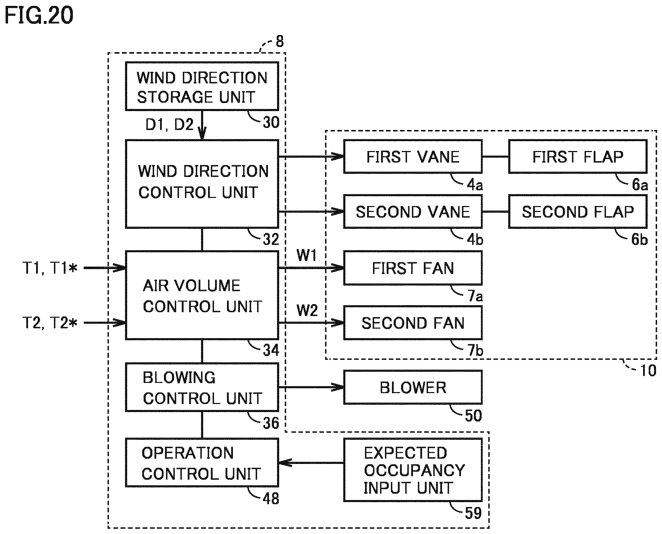

Fig. 20 is a functional block diagram showing the second configuration example of operation control in control device 8. Control device 8 shown in Fig. 20 is different from control device 8 shown in Fig. 6 described above in that it includes operation control unit 48 and an expected occupancy input unit 59. The other configuration of control device 8 is similar to that of control device 8 shown in Fig. 6, detailed description of which will not be repeated.

Expected occupancy input unit 59 is configured to receive user's input relating to an expected entrance time and an expected exit time. Upon receipt of user's operation input relating to an expected entrance time and an expected exit time, expected occupancy input unit 59 outputs a signal relating to the received operation to operation control unit 48. Operation control unit 48 controls the operations of air conditioner 1 and blower 50 based on the expected entrance time and the expected exit time to and from room R2.

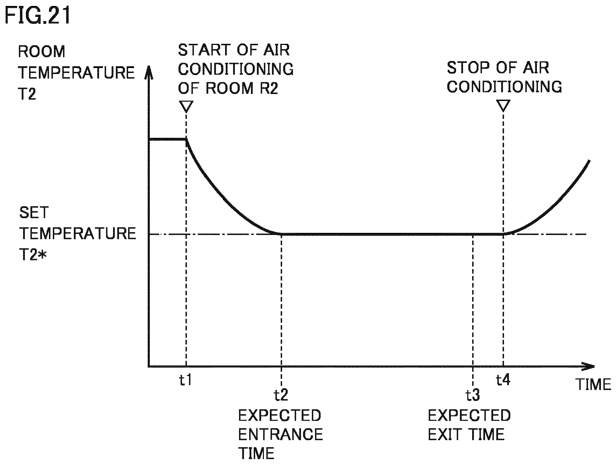

Fig. 21 is a diagram illustrating an example of air conditioning of room R2 based on an expected entrance/exit time to/from room R2. In Fig. 21, the horizontal axis represents a time, and the vertical axis represents room temperature T2 of room R2 detected by room temperature sensor S2. A time t2 is an expected entrance time, and a time t3 is an expected exit time. Fig. 21 shows an example of temporal changes in room temperature T2 when room R2 is cooled.

With reference to Fig. 21, operation control unit 48 activates blower 50 at a time t1 before expected entrance time t2. Operation control unit 48 outputs an operation instruction or a switch instruction to wind direction control unit 32 and air volume control unit 34 to blow at least part of the airflow blown from outlet 3 of indoor unit 10 toward communication hole 54. Consequently, air conditioning of room R2 is started.

Air conditioning of room R2 is started at time t1, so that room temperature T2 of room R2 decreases. Consequently, room temperature T2 reaches set temperature T2* at expected entrance time t2 in Fig. 21.

Operation control unit 48 further stops the operation of blower 50 at a time t4 after expected exit time t3. Operation control unit 48 outputs an operation stop instruction or a switch instruction to wind direction control unit 32 and air volume control unit 34 to stop blowing an airflow to communication hole 54. Consequently, air conditioning of room R2 is stopped.

In the second configuration example of operation control, in air conditioning of room R2, air conditioning of room R2 is automatically started at a time before the expected entrance time to room R2, thus allowing room temperature T2 of room R2 to be matched with set temperature T2* at expected entrance time t2. Consequently, the comfort of the occupant in room R2 can be improved. Also, air conditioning start time t1 is adjusted based on the air conditioning load of room R2 for room temperature T2 to reach set temperature T2* immediately before expected entrance time t2, thereby reducing unnecessary power consumption when air conditioning of room R2 is not required.

### [Embodiment 5 of the invention]

Embodiment 5 will describe a configuration in which air conditioning system 100 air-conditions room R1 (first room), room R2 (second room), and a room R3 (third room).

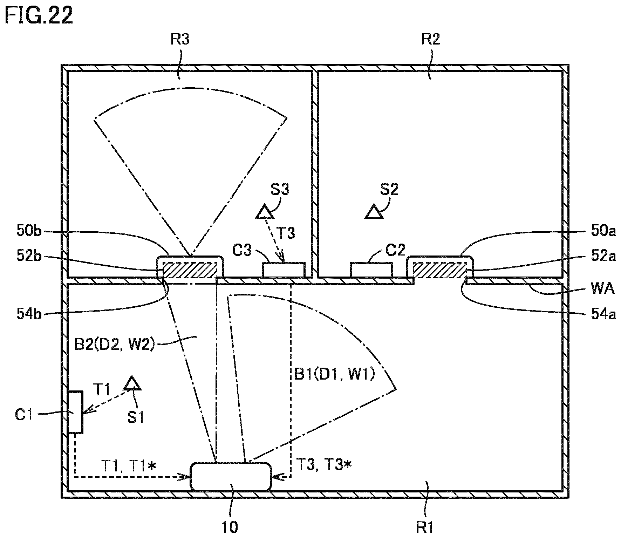

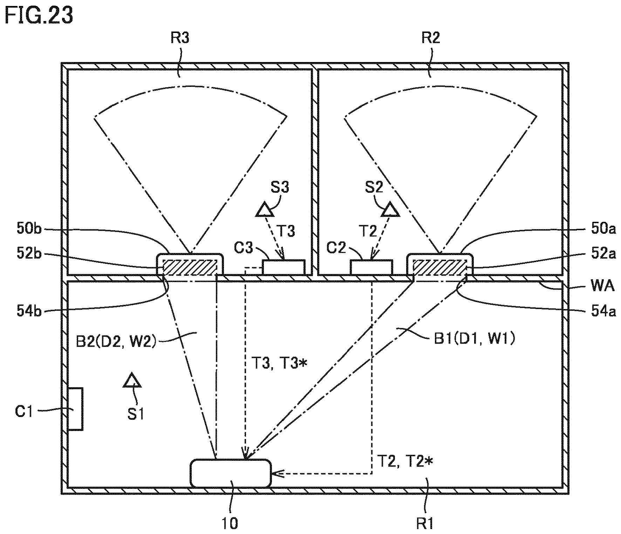

The operation mode of air conditioning system 100 according to Embodiment 5 will be described with reference to Figs. 22 and 23. Figs. 22 and 23 are schematic diagrams showing how room R1, room R2, and room R3 are air-conditioned, viewed from above.

With reference to Fig. 22, room R3 is separated from room R1 by wall WA. In the example of Fig. 22, room R2 and room R3 are separated from room R1 by common wall WA and are adjacent to each other. Alternatively, room R3 may be separated from room R1 by another wall (second partition unit) different from wall WA. Room R3 does not need to be adjacent to room R2.

A communication hole 54a (first communication hole) communicating room R1 with room R2 and a communication hole 54b (second communication hole) communicating room R1 with room R3 are formed in wall WA. Communication holes 54a and 54b are preferably disposed at higher locations near the ceiling of room R1.

A blower 50a (hereinbelow, also referred to as "first blower") is placed in room R2. First blower 50a is preferably disposed below communication hole 54a. The airflow that has passed through communication hole 54a is introduced into the body of first blower 50a through an inlet (not shown). An introducing member 52a is attached to the upper surface of blower 50a. The configuration of introducing member 52a is identical to the configuration of introducing member 52 shown in Fig. 5.

Controller C2 and room temperature sensor S2 are further placed in room R2. Various operation instructions and set temperature T2* from the user that are input to controller C2, and detected value T2 by room temperature sensor S2 are input to the control device in indoor unit 10.

A blower 50b (hereinbelow, also referred to as "second blower") is placed in room R3. Second blower 50b is preferably disposed below communication hole 54b. The airflow that has passed through communication hole 54b is introduced into the body of second blower 50b through an inlet (not shown). An introducing member 52b is attached to an upper surface of second blower 50b. The configuration of introducing member 52b is identical to the configuration of introducing member 52 shown in Fig. 5.

A controller C3 and a room temperature sensor S3 are further placed in room R3. Controller C3 is similar to controller C2 described above in basic configuration. Room temperature sensor S3 detects a room temperature T3 of room R3. A value detected by room temperature sensor S3 is input to controller C3.

Controller C3 and indoor unit 10 are communicated with each other by wire or wirelessly. Various operation instructions and a set temperature (cooling temperature, heating temperature) T3* from the user that are input to controller C3, and a detected value T3 detected by room temperature sensor S3 are input to the control device in indoor unit 10.

Air conditioning system 100 according to Embodiment 5 can switch its operation mode among the mode of air-conditioning a single room (mode of air-conditioning room R1 alone, mode of air-conditioning room R2 alone, mode of air-conditioning room R3), the mode of air-conditioning two rooms (mode of air-conditioning room R1 and room R2, mode of air-conditioning room R1 and room R3, mode of air-conditioning room R2 and room R3), and the mode of air-conditioning three rooms.

Fig. 22 is a diagram for illustrating the mode of air-conditioning room R1 and room R3. With reference to Fig. 22, in the mode of air-conditioning room R1 and room R3, control device 8 (see Fig. 6) outputs an operation stop instruction to first blower 50a and outputs an operation start instruction to second blower 50b. Upon receipt of the operation start instruction, the control device of second blower 50b activates a blowing fan (not shown).

Air conditioner 1 blows first airflow B1 toward room R1 and blows second airflow B2 toward communication hole 54b. For example, wind direction control unit 32 (see Fig. 6) adjusts the angle of inclination of the first wind direction adjusting member (first vane 4a and first flap 6a in Fig. 4) such that direction D1 of first airflow B1 is directed to room R1. Wind direction control unit 32 further adjusts the angle of inclination of the second wind direction adjusting member (second vane 4b and second flap 6b in Fig. 4) such that direction D2 of second airflow B2 is directed to communication hole 54b. Directions D1 and D2 are stored in wind direction storage unit 30 (see Fig. 6) in advance.

Air volume control unit 34 (see Fig. 6) adjusts volume of air W1 of first airflow B1 and volume of air W2 of second airflow B2 based on temperature difference ΔT1 and temperature difference ΔT3 between room temperature T3 detected by room temperature sensor S3 and set temperature T3*. For example, when the absolute value (=|ΔT1-ΔT3|) of the difference between temperature differences ΔT1 and ΔT3 is equal to or less than a threshold Tth set in advance, air volume control unit 34 causes volume of air W1 and volume of air W2 to be equal to each other. The volume of air at this time may be set by, for example, the controller or may be set based on temperature difference ΔT1.

When the absolute value exceeds threshold Tth, air volume control unit 34 adjusts volumes of air W1 and W2 in accordance with the relationship of magnitude between temperature differences ΔT1 and ΔT3. Specifically, when temperature difference ΔT1 is greater than temperature difference ΔT3 (ΔT1>ΔT3), air volume control unit 34 increases volume of air W1. Contrastingly, when temperature difference ΔT3 is greater than temperature difference ΔT1 (ΔT3>ΔT1), air volume control unit 34 increases volume of air W2. That is to say, air volume control unit 34 is configured to compare the magnitude between temperature difference ΔT1 of room R1 and temperature difference ΔT3 of room R3 and increase the volume of air of an airflow blown to a room with a greater temperature difference.

Air volume control unit 34 controls the speeds of rotation of blowing fans 7a and 7b such that each of volumes of air W1 and W2 is matched with the adjusted volume of air. Air volume control unit 34 further controls the speed of rotation of first fan 7a to reduce volume of air W1 when temperature difference ΔT1 is equal to or smaller than threshold α. When temperature difference ΔT3 is equal to or smaller than threshold α, air volume control unit 34 controls the speed of rotation of second fan 7b to reduce volume of air W2.

Such a configuration enables air conditioning of room R1 using first airflow B1 blown from outlet 3 of indoor unit 10 and also air conditioning of room R3 using second airflow B2.

Fig. 23 is a diagram for illustrating the mode of air-conditioning room R2 and room R3. With reference to Fig. 23, in the mode of air-conditioning room R2 and room R3, control device 8 outputs an operation start instruction to first blower 50a and second blower 50b. Upon receipt of the operation start instruction, the control device of each of first blower 50a and second blower 50b activates the blowing fan.

Air conditioner 1 blows first airflow B1 toward communication hole 54a. For example, wind direction control unit 32 adjusts the angle of inclination of the first wind direction adjusting member such that direction D1 of first airflow B1 is directed to communication hole 54a. Wind direction control unit 32 further adjusts the angle of inclination of the second wind direction adjusting member such that direction D2 of second airflow B2 is directed to communication hole 54b. Both of directions D1 and D2 are stored in wind direction storage unit 30 (see Fig. 6) in advance.

Air volume control unit 34 adjusts volume of air W1 of first airflow B1 and volume of air W2 of second airflow B2 based on temperature differences ΔT2 and ΔT3. For example, when the absolute value (=|ΔT2-ΔT3|) of the difference between temperature differences ΔT2 and ΔT3 is equal to or smaller than a predetermined threshold Tth, air volume control unit 34 causes volume of air W1 and volume of air W2 to be an equal amount. The volume of air at this time may be, for example, set by the controller or may be set based on temperature difference ΔT2 (or ΔT3).

When the absolute value is greater than threshold Tth, air volume control unit 34 adjusts volumes of air W1 and W2 in accordance with the relationship of magnitude between temperature differences ΔT2 and ΔT3. Specifically, when temperature difference ΔT2 is greater than temperature difference ΔT3 (ΔT2>ΔT3), air volume control unit 34 increases volume of air W1. Contrastingly, when temperature difference ΔT3 is greater than temperature difference ΔT2 (ΔT3>ΔT2), air volume control unit 34 increases volume of air W2. That is to say, air volume control unit 34 is configured to compare the magnitude between temperature difference ΔT2 of room R2 and temperature difference ΔT3 of room R3 and increase the volume of air of an airflow blown toward a room with a greater temperature difference.

Air volume control unit 34 controls the speeds of rotation of blowing fans 7a and 7b such that each of volumes of air W1 and W2 is matched with the adjusted volume of air. When temperature difference ΔT2 is equal to or smaller than threshold α, air volume control unit 34 further controls the speed of rotation of first fan 7a to reduce volume of air W1. When temperature difference ΔT3 is equal to or smaller than threshold α, air volume control unit 34 controls the speed of rotation of second fan 7b to reduce volume of air W2.

### [Air Volume Control of Air Conditioner]

Next, air volume control performed by control device 8 of air conditioner 1 in the mode of air-conditioning room R2 and room R3 (see Fig. 23) will be described.

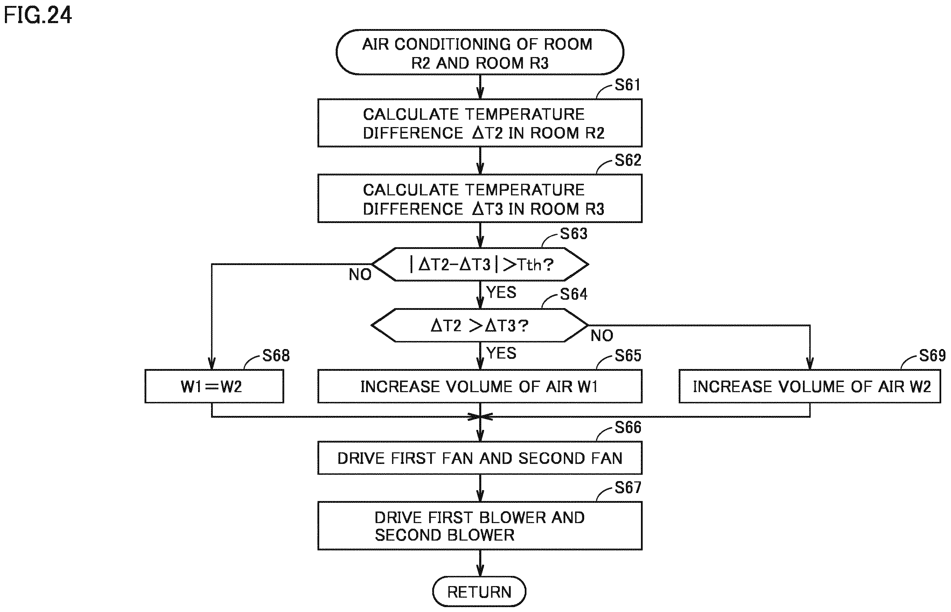

Fig. 24 is a flowchart illustrating an example of air volume control of airflows B1 and B2 blown from air conditioner 1. The flowchart shown in Fig. 24 is repeatedly performed in control device 8.

With reference to Fig. 24, when the operation mode of air conditioning system 100 is the mode of air-conditioning room R3 and room R3, at step S61, control device 8 calculates temperature difference ΔT2 between room temperature T2 of room R2 which has been detected by room temperature sensor S2 and set temperature T2*. At step S62, control device 8 calculates temperature difference ΔT3 between room temperature T3 of room R3 which has been detected by room temperature sensor S3 and set temperature T3*.

Control device 8 then compares the magnitude between temperature difference ΔT2 in room R2 and temperature difference ΔT3 in room R3. Specifically, at step S63, control device 8 calculates the absolute value (=|ΔT2-ΔT3|) of the difference between temperature difference ΔT2 and temperature difference ΔT3 and compares the calculated absolute value of the difference and a predetermined threshold Tth. When the absolute value of the difference is equal to or smaller than the predetermined threshold Tth (determined NO at S63), control device 8 proceeds to step S68 to cause volume of air W1 and volume of air W2 to be equal to each other. At step S68, the volume of air may be set by the controller or set based on temperature difference ΔT2 (or ΔT3).

Contrastingly, when the absolute value of the difference is greater than the predetermined threshold Tth (determined YES at S63), control device 8 proceeds to step S64 to determine whether temperature difference ΔT2 is greater than temperature difference ΔT3. When temperature difference ΔT2 is greater than temperature difference ΔT3 (determined YES at S64), at step S65, control device 8 increases volume of air W1. Contrastingly, when temperature difference ΔT3 is greater than temperature difference ΔT2 (determined NO at S64), at step S69, control device 8 increases volume of air W2.

At step S66, control device 8 drives first fan 7a such that volume of air W1 is matched with the volume of air adjusted at step S68 or S65. Control device 8 also drives second fan 7b such that volume of air W2 is matched with the volume of air adjusted at step S68 or S69. At step S67, control device 8 further outputs an operation start instruction to first blower 50a and second blower 50b to drive first blower 50a and second blower 50b.

### [Operation Control of Air Conditioner]

Description will now be given of operation control of air conditioner 1 and blowers 50a and 50b in the mode of air-conditioning room R1, room R2, and room R3.

As shown in Figs. 22 and 23, since two types of airflows are blown from outlet 3 of indoor unit 10, an airflow cannot be simultaneously blown to each of room R1, communication hole 54a, and communication hole 54b.

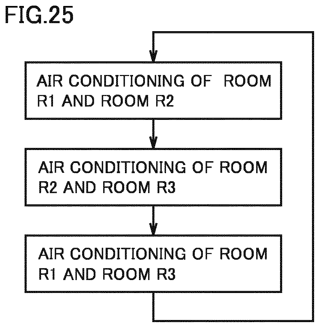

Air conditioning system 100 accordingly uses the mode of air-conditioning two rooms to perform the mode of air-conditioning room R1, room R2, and room R3. Specifically, as shown in Fig. 25, air conditioning system 100 is configured to perform the operation mode of air-conditioning room R1 and room R2 (see Fig. 9), the mode of air-conditioning room R2 and room R3 (see FIG. 24), and the mode of air-conditioning room R1 and room R3 (see Fig. 23) by switching in accordance with a lapse of time. Switching among the three operation modes is repeatedly performed, thereby substantially air-conditioning three rooms R1, R2, and R3.

Air conditioning system 100 according to Embodiment 5 can air-condition room R2 using first airflow B1 blown from outlet 3 of indoor unit 10 and air-condition room R3 using second airflow B2. In this configuration, the wind direction and the volume of air of each of first airflow B1 and second airflow B2 are adjusted independently of each other, thus air-conditioning room R2 and room R3 independently of each other.

That is to say, air conditioning system 100 according to Embodiment 5 can air-condition two rooms R2 and R3 in which air conditioner 1 is not placed independently of room R1 in which air conditioner 1 is placed. This achieves the comfort of the occupants in room R2 and room R3 and the comfort of the occupant in room R1. Also, blowing an airflow toward each of communication holes 54a and 54b by air conditioner 1 enables air conditioning of rooms R2 and R3 without requiring air conditioning of room R1, which improves air conditioning efficiency by air conditioning system 100.

The above embodiments are to be combined as appropriate within the scope of the claims. It should be construed that the embodiments disclosed herein are given by way of illustration in all respects, not by way of limitation. The scope of the present invention is defined by claims.

### REFERENCE SIGNS LIST

1 air conditioner, 2, 55 inlet, 3, 56 outlet, 4, 53a wind direction vane, 4a first vane, 4b second vane, 6a first flap, 6b second flap, 7a blowing fan (first fan), 7b blowing fan (second fan), 8, 58 control device, 9 imaging unit, 9a, 9b, 11a, 11b motor, 10 indoor unit, 12, 22 heat exchanger, 14 throttle device, 16 refrigerant pipe, 20 outdoor unit, 24, 51 blowing fan, 26 four-way valve, 28 compressor, 30 wind direction storage unit, 32 wind direction control unit, 34 air volume control unit, 36 blowing control unit, 38 wind direction learning unit, 40 wind direction input unit, 42 communication hole input unit, 44 wind direction computing unit, 46 image analyzing unit, 48 operation control unit, 50 blower, 50a first blower, 50b second blower, 52, 52a, 52b introducing member, 53b flap, 54, 54a, 54b communication hole, 57 occupancy detection unit, 59 expected occupancy input unit, 100 air conditioning system, 1000 refrigeration system, B1 first airflow, B2 second airflow, D1, D2, D1a-D1d, D2a-D2d direction of airflow, W1, W2 volume of air of airflow, S1-S3 room temperature sensor, C1-C3 controller, M1, M2 occupant, R1-R3 room, WA wall.

## Claims

1. A system comprising:
an air conditioning system (100);
a plurality of rooms having a first room (R1) and a second room (R2); and
a first partition unit (WA) separating the first room (R1) from the second room, with a first communication hole (54) communicating the first room (R1) with the second room (R2),
wherein the air conditioning system (100) comprises
an air conditioner (1) placed in the first room (R1) and to blow a first airflow (B1) and a second airflow (B2) in parallel;
a first blower (50) placed in the second room (R2) ; and
a control device (8) configured to control operations of the air conditioner (1) and the first blower (50),
wherein the air conditioner comprises:
a first fan (7a) configured to generate the first airflow (B1);
a second fan (7b) disposed in parallel with the first fan (7a) to an outlet and configured to generate the second airflow (B2);
a first wind direction adjusting member (4a, 6a) configured to adjust a direction of the first airflow (B 1); and
a second wind direction adjusting member (4b, 6b) configured to adjust a direction of the second airflow (B2),
wherein the control device (8) is configured to:
control speeds of rotation of the first fan (7a) and the second fan (7b),
control angles of inclination of the first wind direction adjusting member (4a, 6a) and the second wind direction adjusting member (4b, 6b), and
drive the first blower (50) in air conditioning of the second room (R2) by the air conditioning system (100),
wherein the control device (8) includes:
a wind direction storage unit (30) configured to store information indicative of the directions (D1, D2) of the first and the second airflows (B1, B2) that are set per operation mode of the air conditioning system;
a wind direction control unit (32) configured to drive the first wind direction adjusting member (4a, 6a) and the second wind direction adjusting member (4b, 6b) based on the information read from the wind direction storage unit (30);
an air volume control unit (34) configured to control volume of air of the first airflow (B1) and volume of air of the second airflow (B2); and
a blowing control unit (36) configured to control an operation of the first blower (50),
wherein the air conditioning system (100) has a first operation mode for air conditioning the first room (R1) and the second room (R2),
the information stored in the wind direction storage unit (30) includes a first information, the first information indicating that the direction of the first airflow (B 1) is directed to the first room (R1) and the direction of the second airflow (B2) is directed to the first communication hole (54),
in the first operation mode, the wind direction control unit (32) is configured to adjust the angle of inclination of the first wind direction adjusting member (4a, 6a) and the second wind direction adjusting member (4b, 6b) based on the first information, and the blowing control unit (36) is configured to control the first blower (50) such that the second airflow (B2) passed through the first communication hole (54) is introduced into the second room (R2).

2. The system according to claim 1, the air conditioning system (100) further having a second operation mode for air conditioning the second room (R2) alone, the information stored in the wind direction storage unit (30) includes a second information, the second information indicating that the directions of the first airflow (B1) and the second airflow (B2) are directed to the first communication hole (54),
wherein, in the second operation mode, the wind direction control unit (32) is configured to adjust the angle of inclination of the first wind direction adjusting member (4a, 6a) and the second wind direction adjusting member (4b, 6b) based on the second information, and the blowing control unit (36) is configured to control the first blower (50) such that the first airflow (B1) and the second airflow (B2) passed through the first communication hole (54) are introduced into the second room (R2).

3. The system according to claim 1 or 2, wherein the air conditioning system (100) further has a third operation mode for air conditioning the first room (R1) alone,
the information stored in the wind direction storage unit (30) includes a third information, the third information indicating that the directions of the first airflow (B1) and the second airflow (B2) are directed to the first room (R1),
wherein, in the third operation mode, the wind direction control unit (32) is configured to adjust the angle of inclination of the first wind direction adjusting member (4a, 6a) and the second wind direction adjusting member (4b, 6b) based on the third information, and the blowing control unit (36) is configured to stop the operation of the first blower (50).

4. The system according to claim 1, further comprising:
a first temperature sensor (S1) configured to detect a first temperature of the first room (R1); and
a second temperature sensor (S2) configured to detect a second temperature of the second room (R2),
wherein, in the first operation mode, the air volume control unit (34) is configured to
control speeds of rotation of the first fan (7a) and the second fan (7b) such that the volume of air of the first airflow (B1) is greater than the volume of air of the second airflow (B2), when a first temperature difference between the first temperature and a first set temperature set in advance is greater than a second temperature difference between the second temperature and a second set temperature set in advance, and
control speeds of rotation of the first fan (7a) and the second fan (7b) such that the volume of air of the second airflow (B2) is greater than the volume of air of the first airflow (B 1), when the second temperature difference is greater than the first temperature difference.

5. The system according to claim 2, further comprising:
a second temperature sensor (S2) configured to detect a second temperature of the second room (R2),
wherein the control device (8) further comprises a wind direction learning unit (38) configured to:
learn a wind direction for blowing the first airflow (B 1) based on a relationship between the direction of the first airflow (B1) and a set temperature arrival time, the set temperature arrival time being a period of time from start of air conditioning of the second room (R2) to arrival of the second temperature to a set temperature;
learn a wind direction for blowing the second airflow (B2) toward the first communication hole (54 ) based on a relationship between the direction of the second airflow (B2) and the set temperature arrival time; and
store a result of the learning in the wind direction storage unit (30),
wherein, in the first and the second operation modes, the wind direction control unit (32) is configured to control the angles of inclination of the first wind direction adjusting member (4a, 6a) and the second wind direction adjusting member (4b, 6b) based on the result of the learning.

6. The system according to claim 2, the air conditioning system (100) further comprising a wind direction input unit (40) configured to receive an input relating to a blowing direction for blowing the first airflow (B 1) and the second airflow (B2) toward the first communication hole (54),
wherein in the first and the second operation modes, the wind direction control unit (32) is configured to control the angles of inclination of the first wind direction adjusting member (4a, 6a) and the second wind direction adjusting member (4b, 6b) in accordance with the input stored in the wind direction input unit (40).

7. The system according to claim 2, the air conditioning system (100) further comprising an imaging unit (9) configured to take an image of the first partition unit (WA), wherein
the control device (8) further includes a wind direction computing unit (44) and an image analyzing unit (46), wherein the
image analyzing unit is configured to detect a position of the first communication hole (54) in the first partition unit (WA) based on the image taken by the imaging unit (9), and
the wind direction computing unit is configured, based on the detected position of the first communication hole (54), to compute a direction for blowing the first airflow (B1) and the second airflow (B2) toward the first communication hole (54), and to store the computational result in the wind storage unit (30);
wherein, in the first and the second operation mode, the control device (8) is configured to control the angles of inclination of the first wind direction adjusting member (4a, 6a) and the second wind direction adjusting member (4b, 6b) based on the computational result stored in the wind storage unit (30).

8. The system according to claim 4, wherein
the first communication hole (54) is disposed at a position for communicating a higher location of the first room (R1) with a higher location of the second room (R2), and
when the air conditioning system (100) cools the second room (R2) in the first and in the second operation modes, the air volume control unit (34) is configured to control the speeds of rotation of the first fan (7a) and the second fan (7b) such that a volume of air of an airflow blown toward the first communication hole (54) is greater than a volume of air set in advance.

9. The system according to claim 4, wherein
the first communication hole (54) is disposed at a position for communicating a higher location of the first room (R1) with a higher location of the second room (R2), and
when the air conditioning system (100) heats the second room in the first and the second operation modes, the air volume control unit (34) is configured to control the speeds of rotation of the first fan (7a) and the second fan (7b) such that a volume of air of an airflow blown toward the first communication hole (54) is smaller than a volume of air set in advance.

10. The system according to claim 2, the air conditioning system (100) further comprising an occupancy detection unit (57) configured for being placed in the second room (R2) and configured to detect presence or absence of an occupant in the second room (R2),
wherein the control device (8) further includes an operation control unit (48) configured to control the operations of the air conditioner (1) and the first blower (50) based on a detection signal provided from the occupancy detection unit (57), and
in the first and the second operation modes, , when the occupancy detection unit (57) detects the absence of a person in the second room (R2), the operation control unit is configured to control the air conditioner (1) to stop blowing an airflow toward the first communication hole (54), and to stop the operation of the first blower (50).

11. The system according to claim 2, the air conditioning system (100) further comprising an expected occupancy input unit (59) configured to receive an input relating to an expected entrance time and an expected exit time of a person to and from the second room (R2), the control device (8) further including an operation control unit (48) configured to control the operations of the air conditioner and the first blower based on the expected entrance time and the expected exit time to and from the second room (R2),
wherein, in the second operation mode, , the operation control unit (48) is configured to activate the air conditioner (1) and the first blower (50) at a time before the expected entrance time and stop the air conditioner (1) and the first blower (50) at a time after the expected exit time.

12. The system according to claim 11, wherein, in the first operation mode, the operation control unit (48) is configured to control the air conditioner (1) to start blowing the second airflow (B2) to the first communication hole (54) at a time before the expected entrance time, and control the air conditioner (1) to stop blowing the second airflow (B2) to the first communication hole (54) at a time after the expected exit time.

13. The system according to any one of claims 1 to 12, further comprising a first introducing member (52) attached to the upper surface of the first blower (50) and having a tubular shape with an opening on the first communication hole (54) side and an opening on an inlet (55) of the first blower, the first introducing member being configured to introduce the second airflow (B2) flowed through the first communication hole (54) into the first blower (50), and the first blower (50) being for introducing the second airflow (B2) into the second room (R2).

14. The system according to any one of claims 1 to 3, wherein
the plurality of rooms further has a third room (R3), the system further comprising:
a second partition unit (WA) separating the first room (R1) and the third room (R3), with a second communication hole (54b) for communicating the first room (R1) with the third room (R3),
wherein the air conditioning system (100) further comprises:
a second blower (50b) placed in the third room (R3), and
the air conditioning system has a fourth operation mode for air conditioning the second room (R2) and the third room (R3),
the information stored in the wind direction storage unit (30) includes a fourth information, the fourth information indicating that the direction of the first airflow (B 1) is directed to the first communication hole (54) and the direction of the second airflow (B2) is directed to the second communication hole (54b),
wherein, in the fourth operation mode, the wind direction control unit (32) is configured to control the angles of inclination of the first wind direction adjusting member (4a, 6a) and the second wind direction adjusting member (4b, 6b) based on the fourth information, and the blowing control unit is configured to
control the first blower (50) such that the first airflow (B 1) passed through the first communication hole (54) is introduced into the second room (R2), and
control the second blower (50b) such that the second airflow (B2) passed through the second communication hole (54b) is introduced into the third room (R3).

15. The system according to claim 14, further comprising:
a second temperature sensor (S2) configured to detect a second temperature of the second room (R2), and
a third temperature sensor (S3) configured to detect a third temperature of the third room (R3),
wherein the control device further includes an air volume control unit (34), the air volume control unit (34) being configured to control volume of air of the first airflow (B1) and volume of air of the second airflow (B2),
wherein, in the fourth operation mode,
the air volume control unit (34) is configured to
control speeds of rotation of the first fan (7a) and the second fan (7b) such that the volume of air of the first airflow (B1) is greater than the volume of air of the second airflow (B2), when a second temperature difference between the second temperature and a second set temperature set in advance is greater than a third temperature difference between the third temperature and a third set temperature set in advance, and
control speeds of rotation of the first fan (7a) and the second fan (7b) such that the volume of air of the second airflow (B 1) is greater than the volume of air of the first airflow (B2), when the third temperature difference is greater than the second temperature difference.

16. The system according to claim 14 or 15, further comprising a second introducing member (52b) attached to an upper surface of the second blower (50b) and having a tubular shape with an opening on the second communication hole (54b) and an opening on an inlet of the second blower (50b), the second introducing member being configured to introduce the second airflow (B2) flowed into the second communication hole (54b) into the second blower (50b), and the second blower (50b) being for introducing the second airflow (B2) into the third room (R3).

17. The system according to any one of claims 14 to 16, the air conditioning system (100) further having a fifth operation mode for air conditioning the first room (R1) and the third room (R3), and a sixth operation mode for air conditioning the first room (R1), the second room (R2) and the third room (R3),
the information stored in the wind direction storage unit (30) includes a fifth information, the fifth information indicating that the direction of the first airflow (B1) is directed to the first room (R1) and the direction of the second airflow (B2) is directed to the second communication hole (54b),
wherein, in the fifth operation mode, the wind direction control unit (32) is configured to control the angles of inclination of the first wind direction adjusting member (4a, 6a) and the second wind direction adjusting member (4b, 6b) based on the fifth information, and the blowing control unit is configured to
stop the operation of the first blower (50), and
to control the second blower (50b) such that the second airflow (B2) passed through the second communication hole (54b) is introduced into the third room (R3),
wherein, in the sixth operation mode, the control device (8) is configured to switch among the operation mode of the air conditioning system among the first operation mode, the fourth operation mode and the fifth operation mode, in accordance with a lapse of time.

## Patentansprüche

1. System, aufweisend:
ein Klimaanlagensystem (100);
eine Vielzahl von Räumen mit einem ersten Raum (R1) und einem zweiten Raum (R2); und
eine erste Trenneinheit (WA), die den ersten Raum (R1) von dem zweiten Raum trennt, wobei ein erstes Kommunikationsloch (54) den ersten Raum (R1) mit dem zweiten Raum (R2) kommunizieren lässt;
wobei das Klimaanlagensystem (100) aufweist:
eine in dem ersten Raum (R1) platzierte Klimaanlage (1) und zum parallelen Blasen eines ersten Luftstroms (B1) und eines zweiten Luftstroms (B2);
ein in dem zweiten Raum (R2) platziertes erstes Gebläse (50); und
eine Steuerungsvorrichtung (8), die konfiguriert ist, Betriebe der Klimaanlage (1) und des ersten Gebläses (50) zu steuern;
wobei die Klimaanlage aufweist:
einen ersten Ventilator (7a), der konfiguriert ist, den ersten Luftstrom (B1) zu erzeugen;
einen zweiten Ventilator (7b), der parallel zu dem ersten Ventilator (7a) zu einem Auslass angeordnet ist, und der konfiguriert ist, den zweiten Luftstrom (B2) zu erzeugen;
ein erstes Windrichtungseinstellelement (4a, 6a), das konfiguriert ist, eine Richtung des ersten Luftstroms (B1) einzustellen; und
ein zweites Windrichtungseinstellelement (4b, 6b), das konfiguriert ist, eine Richtung des zweiten Luftstroms (B2) einzustellen,
wobei die Steuerungsvorrichtung (8) konfiguriert ist, um:
Drehzahlen des ersten Ventilators (7a) und des zweiten Ventilators (7b) zu steuern;
Neigungswinkel des ersten Windrichtungseinstellungselements (4a, 6a) und des zweiten Windrichtungseinstellungselements (4b, 6b) zu steuern;
das erste Gebläse (50) bei einer Klimatisierung des zweiten Raums (R2) durch das Klimaanlagensystem (100) anzutreiben,
wobei die Steuerungsvorrichtung (8) aufweist:
eine Windrichtungsspeichereinheit (30), die konfiguriert ist, Informationen zu speichern, welche die Richtungen (D1, D2) des ersten und zweiten Luftstroms (B1, B2) angeben, die pro Betriebsmodus des Klimaanlagensystems festgelegt sind;
eine Windrichtungssteuerungseinheit (32), die konfiguriert ist, das erste Windrichtungseinstellungselement (4a, 6a) und das zweite Windrichtungseinstellungselement (4b, 6b) basierend auf den aus der Windrichtungsspeichereinheit (30) ausgelesenen Informationen anzutreiben;
eine Luftvolumensteuerungseinheit (34), die konfiguriert ist, Luftvolumen der ersten Luftströmung (B1) und Luftvolumen der zweiten Luftströmung (B2) zu steuern;
eine Blassteuerungseinheit (36), die konfiguriert ist, einen Betrieb des ersten Gebläses (50) zu steuern,
wobei das Klimaanlagensystem (100) einen ersten Betriebsmodus zum Klimatisieren des ersten Raums (R1) und des zweiten Raums (R2) aufweist;
die in der Windrichtungsspeichereinheit (30) gespeicherten Informationen eine erste Information aufweisen, wobei die erste Information angibt, dass die Richtung der ersten Luftströmung (B 1) auf den ersten Raum (R1) gerichtet ist und die Richtung der zweiten Luftströmung (B2) auf das erste Kommunikationsloch (54) gerichtet ist,
die Windrichtungssteuerungseinheit (32) in dem ersten Betriebsmodus konfiguriert ist, den Neigungswinkel des ersten Windrichtungseinstellungselements (4a, 6a) und des zweiten Windrichtungseinstellungselements (4b, 6b) basierend auf der ersten Information einzustellen, und die Blassteuerungseinheit (36) konfiguriert ist, das erste Gebläse (50) derart zu steuern, dass die zweite Luftströmung (B2), die durch das erste Kommunikationsloch (54) gelangt ist, in den zweiten Raum (R2) eingeleitet wird.

2. System nach Anspruch 1, wobei das Klimaanlagensystem (100) ferner einen zweiten Betriebsmodus zum Klimatisieren des zweiten Raums (R2) allein aufweist, wobei die in der Windrichtungsspeichereinheit (30) gespeicherten Informationen eine zweite Information aufweisen, wobei die zweite Information angibt, dass die Richtung der ersten Luftströmung (B 1) und die Richtung der zweiten Luftströmung (B2) auf das erste Kommunikationsloch (54) gerichtet sind,
wobei die Windrichtungssteuerungseinheit (32) in dem zweiten Betriebsmodus konfiguriert ist, den Neigungswinkel des ersten Windrichtungseinstellungselements (4a, 6a) und des zweiten Windrichtungseinstellungselements (4b, 6b) basierend auf der ersten Information einzustellen, und die Blassteuerungseinheit (36) konfiguriert ist, das erste Gebläse (50) derart zu steuern, dass die erste Luftströmung (B1) und die zweite Luftströmung (B2), die durch das erste Kommunikationsloch (54) gelangt sind, in den zweiten Raum (R2) eingeleitet werden.

3. System nach Anspruch 1 oder 2, wobei das Klimaanlagensystem (100) ferner einen dritten Betriebsmodus zum Klimatisieren des ersten Raums (R1) allein aufweist,
wobei die in der Windrichtungsspeichereinheit (30) gespeicherten Informationen eine dritte Information aufweisen, wobei die dritte Information angibt, dass die Richtung der ersten Luftströmung (B1) und der zweiten Luftströmung (B2) auf den ersten Raum (R1) gerichtet sind,
wobei die Windrichtungssteuerungseinheit (32) in dem dritten Betriebsmodus konfiguriert ist, den Neigungswinkel des ersten Windrichtungseinstellungselements (4a, 6a) und des zweiten Windrichtungseinstellungselements (4b, 6b) basierend auf der dritten Information einzustellen, und die Blassteuerungseinheit (36) konfiguriert ist, den Betrieb des ersten Gebläses (50) zu stoppen.

4. System nach Anspruch 1, ferner aufweisend:
einen ersten Temperatursensor (S 1), der konfiguriert ist, eine erste Temperatur des ersten Raums (R1) zu detektieren, und
einen zweiten Temperatursensor (S2), der konfiguriert ist, eine zweite Temperatur des zweiten Raums (R2) zu detektieren, und
wobei die Luftvolumensteuerungseinheit (34) in dem ersten Betriebsmodus konfiguriert ist,
Drehzahlen des ersten Ventilators (7a) und des zweiten Ventilators (7b) derart zu steuern, dass das Luftvolumen des ersten Luftstroms (B 1) größer ist als das Luftvolumen des zweiten Luftstroms (B2), wenn eine Temperaturdifferenz zwischen der ersten Temperatur und einer ersten Solltemperatur, die vorab festgelegt wird, größer ist als eine zweite Temperaturdifferenz zwischen der zweiten Temperatur und einer zweiten Solltemperatur, die vorab festgelegt wird, und
Drehzahlen des ersten Ventilators (7a) und des zweiten Ventilators (7b) derart zu steuern, dass das Luftvolumen des zweiten Luftstroms (B2) größer ist als das Luftvolumen des ersten Luftstroms (B1), wenn die zweite Temperaturdifferenz größer ist als die erste Temperaturdifferenz.

5. System nach Anspruch 2, ferner aufweisend:
einen zweiten Temperatursensor (S2), der konfiguriert ist, eine zweite Temperatur des zweiten Raums (R2) zu detektieren,
wobei die Steuerungsvorrichtung (8) ferner eine Windrichtungslerneinheit (38) aufweist, die konfiguriert ist, um:
basierend auf einer Beziehung zwischen der Richtung des ersten Luftstroms (B 1) und einer Solltemperaturerreichungszeit eine Windrichtung zum Blasen des ersten Luftstroms (B1) zu erlernen, wobei die Solltemperaturerreichungszeit ein Zeitraum ab dem Start des Klimatisierens des zweiten Raums (R2), bis die zweite Temperatur eine Solltemperatur erreicht, ist,
basierend auf einer Beziehung zwischen der Richtung der zweiten Luftströmung (B2) und der Solltemperaturerreichungszeit eine Windrichtung zum Blasen des zweiten Luftstroms (B2) in Richtung des zweiten Kommunikationslochs (54) zu erlernen; und
ein Ergebnis des Erlernens in der Windrichtungsspeichereinheit (30) zu speichern,
wobei die Windrichtungssteuerungseinheit (32) in dem ersten und zweiten Betriebsmodus konfiguriert ist, die Neigungswinkel des ersten Windrichtungseinstellungselements (4a, 6a) und des zweiten Windrichtungseinstellungselements (4b, 6b) basierend auf dem Ergebnis des Erlernens zu steuern.

6. System nach Anspruch 1, wobei das Klimaanlagensystem (100) ferner eine Windrichtungseingabeeinheit (40) aufweist, die konfiguriert ist, eine Eingabe zu empfangen, die sich auf eine Blasrichtung zum Blasen des ersten Luftstroms (B1) und des zweiten Luftstroms (B2) in Richtung des ersten Kommunikationslochs (54) bezieht,
wobei die Windrichtungssteuerungseinheit (32) in dem ersten und zweiten Betriebsmodus konfiguriert ist, die Neigungswinkel des ersten Windrichtungseinstellungselements (4a, 6a) und des zweiten Windrichtungseinstellungselements (4b, 6b) gemäß der in die Windrichtungseingabeeinheit (40) gespeicherten Eingabe zu steuern.

7. System nach Anspruch 2, wobei das Klimaanlagensystem (100) ferner eine Bildgebungseinheit (9) aufweist, die konfiguriert ist, ein Bild der ersten Trenneinheit (WA) aufzunehmen, wobei
die Steuerungsvorrichtung (8) ferner eine Windrichtungsberechnungseinheit (44) und eine Bildanalyseeinheit (46) aufweist, wobei die Bildanalyseeinheit konfiguriert ist, eine Position des ersten Kommunikationslochs (54) in der ersten Trenneinheit (WA) basierend auf dem von der Bildgebungseinheit (9) aufgenommenen Bild zu detektieren, und
die Windrichtungsberechnungseinheit konfiguriert ist, basierend auf der detektierten Position des ersten Kommunikationslochs (54) eine Richtung zu berechnen, um den ersten Luftstrom (B1) und den zweiten Luftstrom (B2) in Richtung des ersten Kommunikationslochs (54) zu blasen, und das Rechenergebnis in der Windspeichereinheit (30) zu speichern;
wobei die Steuerungsvorrichtung (8) in dem ersten und zweiten Betriebsmodus konfiguriert ist, die Neigungswinkel des ersten Windrichtungseinstellungselements (4a, 6a) und des zweiten Windrichtungseinstellungselements (4b, 6b) basierend auf dem in der Windspeichereinheit (30) gespeicherten Rechenergebnis zu steuern.

8. System nach Anspruch 4, wobei
das erste Kommunikationsloch (54) an einer Position angeordnet ist, um eine höhere Stelle des ersten Raums (R1) mit einer höheren Stelle des zweiten Raums (R2) kommunizieren zu lassen, und
wenn das Klimaanlagensystem (100) den zweiten Raum (R2) in dem ersten und zweiten Betriebsmodus kühlt, die Luftvolumensteuerungseinheit (34) konfiguriert ist, die Drehzahlen des ersten Ventilators (7a) und des zweiten Ventilators (7b) derart zu steuern, dass ein Luftvolumen einer in Richtung des ersten Kommunikationslochs (54) geblasenen Luftströmung größer ist als ein vorab festgelegtes Luftvolumen.

9. System nach Anspruch 4, wobei
das erste Kommunikationsloch (54) an einer Position zum Kommunizieren einer höheren Stelle in dem ersten Raum (R1) mit einer höheren Stelle des zweiten Raums (R2) angeordnet ist, und
wenn das Klimaanlagensystem (100) in dem ersten und zweiten Betriebsmodus den zweiten Raum erwärmt, die Luftvolumensteuerungseinheit (34) konfiguriert ist, die Drehzahlen des ersten Ventilators (7a) und des zweiten Ventilators (7b) derart zu steuern, dass ein Luftvolumen eines in Richtung des ersten Kommunikationslochs (54) geblasenen Luftstroms kleiner ist als ein zuvor festgelegtes Luftvolumen.

10. System nach Anspruch 2, wobei das Klimaanlagensystem (100) ferner eine Belegungsdetektionseinheit (57) aufweist, die konfiguriert ist, um in dem zweiten Raum (R2) platziert zu werden, und konfiguriert ist, das Vorhandensein oder Nichtvorhandensein eines Nutzers in dem zweiten Raum (R2) zu detektieren,
wobei die Steuerungsvorrichtung (8) ferner eine Betriebssteuerungseinheit (48) aufweist, die konfiguriert ist, die Betriebe der Klimaanlage (1) und des ersten Gebläses (50) basierend auf einem von der Belegungsdetektionseinheit (57) bereitgestellten Signal zu steuern, und
in dem ersten und in dem zweiten Betriebsmodus, wenn die Belegungsdetektionseinheit (57) das Nichtvorhandensein einer Person in dem zweiten Raum (R2) detektiert, die Betriebssteuerungseinheit konfiguriert ist, die Klimaanlage (1) zu steuern, das Blasen eines Luftstroms hin zu dem ersten Kommunikationsloch (54) zu stoppen, und den Betrieb des ersten Gebläses (50) zu stoppen.

11. System nach Anspruch 2, wobei das Klimaanlagensystem (100) ferner eine ein Einheit zur Eingabe einer erwarteten Belegung (59) aufweist, die konfiguriert ist, eine Eingabe in Bezug auf eine erwartete Eintrittszeit und eine erwartete Verlasszeit einer Person in den und aus dem zweiten Raum (R2) zu empfangen, wobei die Steuerungsvorrichtung (8) ferner eine Betriebssteuerungseinheit (48) aufweist, die konfiguriert ist, die Betriebe der Klimaanlage und des ersten Gebläses basierend auf der erwarteten Eintrittszeit und der erwarteten Verlasszeit in den und aus dem zweiten Raum (R2) zu steuern,
wobei die Betriebssteuerungseinheit (48) in dem zweiten Betriebsmodus konfiguriert ist, die Klimaanlage (1) und das erste Gebläse (50) zu einem Zeitpunkt vor der erwarteten Eintrittszeit zu aktivieren und die Klimaanlage (1) und das erste Gebläse (50) zu einem Zeitpunkt nach der erwarteten Eintrittszeit zu stoppen.

12. System nach Anspruch 11, wobei die Betriebssteuerungseinheit (48) in dem ersten Betriebsmodus konfiguriert ist, die Klimaanlage (1) dahingehend zu steuern, zu einem Zeitpunkt vor der erwarteten Eintrittszeit damit zu beginnen, den zweiten Luftstrom (B2) zu dem ersten Kommunikationsloch (54) zu blasen, und die Klimaanlage (1) dahingehend zu steuern, zu einem Zeitpunkt nach der erwarteten Austrittszeit damit aufzuhören, den zweiten Luftstrom (B2) zu dem ersten Kommunikationsloch (54) zu blasen.

13. System nach einem der Ansprüche 1 bis 12, ferner aufweisend ein erstes Einleitungselement (52), das an der oberen Fläche des ersten Gebläses (50) angebracht ist und eine Röhrenform mit einer Öffnung auf der Seite des ersten Kommunikationslochs (54) und einer Öffnung an einem Einlass (55) des ersten Gebläses hat, wobei das erste Einleitungselement konfiguriert ist, den zweiten Luftstrom (B2), der das erste Kommunikationsloch (54) durchströmt hat, in das erste Gebläse (50) einzuleiten, wobei das erste Gebläse (50) dazu dient, den zweiten Luftstrom (B2) in den zweiten Raum (R2) einzuleiten.

14. System nach einem der Ansprüche 1 bis 3, wobei
die Vielzahl von Räumen ferner einen dritten Raum (R3) aufweist, wobei das System ferner aufweist:
eine zweite Trenneinheit (WA), die den ersten Raum (R1) und den dritten Raum (R3) trennt, mit einem zweiten Kommunikationsloch (54b), um den ersten Raum (R1) mit dem dritten Raum (R3) kommunizieren zu lassen,
wobei das Klimaanlagensystem (100) ferner aufweist:
ein zweites Gebläse (50b), das in dem dritten raum (R3) platziert ist, und
das Klimaanlagensystem einen vierten Betriebsmodus zur Klimatisierung des zweiten Raums (R2) und des dritten Raums (R3) aufweist,
die in der Windrichtungsspeichereinheit (30) gespeicherten Informationen eine vierte Information aufweist, wobei die vierte Information angibt, dass die Richtung der ersten Luftströmung (B1) auf das erste Kommunikationsloch (54) gerichtet ist und die Richtung des zweiten Luftstroms (B2) auf das zweite Kommunikationsloch (54) gerichtet ist,
wobei die Windrichtungssteuerungseinheit (32) in dem vierten Betriebsmodus konfiguriert ist, die Neigungswinkel des ersten Windrichtungseinstellungselements (4a, 6a) und des zweiten Windrichtungseinstellungselements (4b, 6b) basierend auf der vierten Information zu steuern, und die Blassteuerungseinheit konfiguriert ist, um
das erste Gebläse (50) derart zu steuern, dass der durch das erste Kommunikationsloch (54) gelangte Luftstrom (B1) in den zweiten Raum (R2) eingeleitet wird, und
das zweite Gebläse (50b) derart zu steuern, dass der durch das zweite Kommunikationsloch gelangte zweite Luftstrom (54b) in den dritten Raum (R3) eingeleitet wird.

15. System nach Anspruch 14, ferner aufweisend:
einen zweiten Temperatursensor (S2), der konfiguriert ist, eine zweite Temperatur des zweiten Raums (R2) zu detektieren, und
einen dritten Temperatursensor (S3), der konfiguriert ist, eine dritte Temperatur des dritten Raums (R3) zu detektieren,
wobei die Steuerungsvorrichtung ferner eine zweite Luftvolumensteuerungseinheit (34) aufweist, wobei die Luftvolumensteuerungseinheit (34) konfiguriert ist, Luftvolumen des ersten Luftstroms (B1) und Luftvolumen des zweiten Luftstroms (B2) zu steuern,
wobei in dem vierten Betriebsmodus
die Luftvolumensteuerungseinheit (34) konfiguriert ist, um
Drehzahlen des ersten Ventilators (7a) und des zweiten Ventilators (7b) derart zu steuern, dass das Luftvolumen des ersten Luftstroms (B1) größer ist als das Luftvolumen des zweiten Luftstroms (B2), wenn eine zweite Temperaturdifferenz zwischen der zweiten Temperatur und einer zweiten Solltemperatur, die vorab festgelegt wurde, größer ist als eine dritte Temperaturdifferenz zwischen der dritten Temperatur und einer dritten Solltemperatur, die vorab festgelegt wurde, und
Drehzahlen des ersten Ventilators (7a) und des zweiten Ventilators (7b) derart zu steuern, dass das Luftvolumen des zweiten Luftstroms (B1) größer ist als das Luftvolumen des ersten Luftstroms, wenn die dritte Temperaturdifferenz größer ist als die zweite Temperaturdifferenz.

16. System nach Anspruch 14 oder 15, ferner aufweisend ein zweites Einleitungselement (52b), das an einer oberen Fläche des zweiten Gebläses (50b) angebracht ist und eine Röhrenform mit einer Öffnung an dem zweiten Kommunikationsloch (54b) und einer Öffnung an einem Einlass des zweiten Gebläses (50b) aufweist, wobei das zweite Einleitungselement konfiguriert ist, den zweiten Luftstrom (B2), der in das zweite Kommunikationsloch (54b) geströmt ist, in das zweite Gebläse (50b) einzuleiten, und das zweite Gebläse (50b) dazu dient, den zweiten Luftstrom (B2) in den dritten Raum (R3) einzuleiten.

17. System nach einem der Ansprüche 14 bis 16, wobei das Klimaanlagensystem (100) ferner einen fünften Betriebsmodus zum Klimatisieren des ersten Raums (R1) und des dritten Raums (R3) und einen sechsten Betriebsmodus zum Klimatisieren des ersten Raums (R1), des zweiten Raums (R2) und des dritten Raums (R3) aufweist,
die in der Windrichtungsspeichereinheit (30) gespeicherten Informationen eine fünfte Information enthalten, wobei die fünfte Information angibt, dass die Richtung des ersten Luftstroms (B1) auf den ersten Raum (R1) gerichtet ist und die Richtung des zweiten Luftstroms (B2) auf das zweite Kommunikationsloch (54b) gerichtet ist,
wobei die Windrichtungssteuerungseinheit (32) in dem fünften Betriebsmodus konfiguriert ist, die Neigungswinkel des ersten Windrichtungseinstellungselements (4a, 6a) und des zweiten Windrichtungseinstellungselements (4b, 6b) basierend auf der fünften Information zu steuern, und die Blassteuerungseinheit konfiguriert ist, um
den Betrieb des ersten Gebläses (50) zu stoppen, und
das zweite Gebläse (50b) derart zu steuern, dass der zweite Luftstrom (B2), der durch das zweite Kommunikationsloch (54b) gelangt ist, in den dritten Raum (R3) eingeleitet wird,
wobei die Steuerungsvorrichtung (8) in dem sechsten Betriebsmodus konfiguriert ist, den Betriebsmodus des Klimaanlagensystems zwischen dem ersten Betriebsmodus, dem vierten Betriebsmodus und dem fünften Betriebsmodus gemäß einem Verstreichen von Zeit hin und her zu schalten.

## Revendications

1. Système comprenant :
un système de climatisation (100) ;
une pluralité de pièces comportant une première pièce (R1) et une deuxième pièce (R2) ; et
une première unité de partition (WA) séparant la première pièce (R1) de la deuxième pièce, avec un premier trou de communication (54) mettant en communication la première pièce (R1) avec la deuxième pièce (R2),
dans lequel le système de climatisation (100) comprend
un climatiseur (1) placé dans la première pièce (R1) et destiné à souffler un premier écoulement d'air (B1) et un deuxième écoulement d'air (B2) en parallèle ;
une première soufflante (50) placée dans la deuxième pièce (R2) ; et
un dispositif de commande (8) configuré pour commander des fonctionnements du climatiseur (1) et de la première soufflante (50),
dans lequel le climatiseur comprend :
un premier ventilateur (7a) configuré pour générer le premier écoulement d'air (B1) ;
un deuxième ventilateur (7b) disposé en parallèle avec le premier ventilateur (7a) à une sortie et configuré pour générer le deuxième écoulement d'air (B2) ;
un premier organe d'ajustement de direction du vent (4a, 6a) configuré pour ajuster une direction du premier écoulement d'air (B1) ; et
un deuxième organe d'ajustement de direction du vent (4b, 6b) configuré pour ajuster une direction du deuxième écoulement d'air (B2),
dans lequel le dispositif de commande (8) est configuré pour :
commander des vitesses de rotation du premier ventilateur (7a) et du deuxième ventilateur (7b),
commander des angles d'inclinaison du premier organe d'ajustement de direction du vent (4a, 6a) et du deuxième organe d'ajustement de direction du vent (4b, 6b), et
piloter la première soufflante (50) dans la climatisation de la deuxième pièce (R2) par le système de climatisation (100),
dans lequel le dispositif de commande (8) inclut :
une unité de stockage de direction du vent (30) configurée pour stocker des informations indicatives des directions (D1, D2) des premier et deuxième écoulements d'air (B1, B2) qui sont réglés selon un mode de fonctionnement du système de climatisation ;
une unité de commande de direction du vent (32) configurée pour piloter le premier organe d'ajustement de direction du vent (4a, 6a) et le deuxième organe d'ajustement de direction du vent (4b, 6b) sur la base des informations lues depuis l'unité de stockage de direction du vent (30) ;
une unité de commande de volume d'air (34) configurée pour commander un volume d'air du premier écoulement d'air (B1) et un volume d'air du deuxième écoulement d'air (B2) ; et
une unité de commande de soufflage (36) configurée pour commander un fonctionnement de la première soufflante (50),
dans lequel le système de climatisation (100) comporte un premier mode de fonctionnement pour la climatisation de la première pièce (R1) et de la deuxième pièce (R2),
les informations stockées dans l'unité de stockage de direction du vent (30) incluent une première information, la première information indiquant que la direction du premier écoulement d'air (B1) est dirigée vers la première pièce (R1) et la direction du deuxième écoulement d'air (B2) est dirigée vers le premier trou de communication (54),
dans le premier mode de fonctionnement, l'unité de commande de direction du vent (32) est configurée pour ajuster l'angle d'inclinaison du premier organe d'ajustement de direction du vent (4a, 6a) et du deuxième organe d'ajustement de direction du vent (4b, 6b) sur la base de la première information, et l'unité de commande de soufflage (36) est configurée pour commander la première soufflante (50) de sorte que le deuxième écoulement d'air (B2) ayant traversé le premier trou de communication (54) soit introduit dans la deuxième pièce (R2).

2. Système selon la revendication 1, le système de climatisation (100) comportant en outre un deuxième mode de fonctionnement pour la climatisation de la deuxième pièce (R2) uniquement, les informations stockées dans l'unité de stockage de direction du vent (30) incluent une deuxième information, la deuxième information indiquant que les directions du premier écoulement d'air (B1) et du deuxième écoulement d'air (B2) sont dirigées vers le premier trou de communication (54),
dans lequel, dans le deuxième mode de fonctionnement, l'unité de commande de direction du vent (32) est configurée pour ajuster l'angle d'inclinaison du premier organe d'ajustement de direction du vent (4a, 6a) et du deuxième organe d'ajustement de direction du vent (4b, 6b) sur la base de la deuxième information, et l'unité de commande de soufflage (36) est configurée pour commander la première soufflante (50) de sorte que le premier écoulement d'air (B1) et le deuxième écoulement d'air (B2) ayant traversé le premier trou de communication (54) soient introduits dans la deuxième pièce (R2).

3. Système selon la revendication 1 ou 2, dans lequel le système de climatisation (100) comporte en outre un troisième mode de fonctionnement pour la climatisation de la première pièce (R1) uniquement,
les informations stockées dans l'unité de stockage de direction du vent (30) incluent une troisième information, la troisième information indiquant que les directions du premier écoulement d'air (B1) et du deuxième écoulement d'air (B2) sont dirigées vers la première pièce (R1),
dans lequel, dans le troisième mode de fonctionnement, l'unité de commande de direction du vent (32) est configurée pour ajuster l'angle d'inclinaison du premier organe d'ajustement de direction du vent (4a, 6a) et du deuxième organe d'ajustement de direction du vent (4b, 6b) sur la base de la troisième information, et l'unité de commande de soufflage (36) est configurée pour arrêter le fonctionnement de la première soufflante (50).

4. Système selon la revendication 1, comprenant en outre :
un premier capteur de température (S1) configuré pour détecter une première température de la première pièce (R1) ; et
un deuxième capteur de température (S2) configuré pour détecter une deuxième température de la deuxième pièce (R2),
dans lequel, dans le premier mode de fonctionnement, l'unité de commande de volume d'air (34) est configurée pour
commander des vitesses de rotation du premier ventilateur (7a) et du deuxième ventilateur (7b) de sorte que le volume d'air du premier écoulement d'air (B1) soit supérieur au volume d'air du deuxième écoulement d'air (B2), lorsqu'une première différence de température entre la première température et une première température de consigne réglée à l'avance est supérieure à une deuxième différence de température entre la deuxième température et une deuxième température de consigne réglée à l'avance, et
commander des vitesses de rotation du premier ventilateur (7a) et du deuxième ventilateur (7b) de sorte que le volume d'air du deuxième écoulement d'air (B2) soit supérieur au volume d'air du premier écoulement d'air (B1), lorsque la deuxième différence de température est supérieure à la première différence de température.

5. Système selon la revendication 2, comprenant en outre :
un deuxième capteur de température (S2) configuré pour détecter une deuxième température de la deuxième pièce (R2),
dans lequel le dispositif de commande (8) comprend en outre une unité d'apprentissage de direction du vent (38) configurée pour :
apprendre une direction du vent pour le soufflage du premier écoulement d'air (B1) sur la base d'une relation entre la direction du premier écoulement d'air (B1) et un temps d'arrivée de température de consigne, le temps d'arrivée de température de consigne étant une période de temps depuis un démarrage de la climatisation de la deuxième pièce (R2) jusqu'à une arrivée de la deuxième température à une température de consigne ;
apprendre une direction du vent pour le soufflage du deuxième écoulement d'air (B2) vers le premier trou de communication (54) sur la base d'une relation entre la direction du deuxième écoulement d'air (B2) et le temps d'arrivée de température de consigne ; et
stocker un résultat de l'apprentissage dans l'unité de stockage de direction du vent (30),
dans lequel, dans les premier et deuxième modes de fonctionnement, l'unité de commande de direction du vent (32) est configurée pour commander les angles d'inclinaison du premier organe d'ajustement de direction du vent (4a, 6a) et du deuxième organe d'ajustement de direction du vent (4b, 6b) sur la base du résultat de l'apprentissage.

6. Système selon la revendication 2, le système de climatisation (100) comprenant en outre une unité d'entrée de direction du vent (40) configurée pour recevoir une entrée relative à une direction de soufflage pour le soufflage du premier écoulement d'air (B1) et du deuxième écoulement d'air (B2) vers le premier trou de communication (54),
dans lequel, dans les premier et deuxième modes de fonctionnement, l'unité de commande de direction du vent (32) est configurée pour commander les angles d'inclinaison du premier organe d'ajustement de direction du vent (4a, 6a) et du deuxième organe d'ajustement de direction du vent (4b, 6b) en fonction de l'entrée stockée dans l'unité d'entrée de direction du vent (40).

7. Système selon la revendication 2, le système de climatisation (100) comprenant en outre une unité d'imagerie (9) configurée pour prendre une image de la première unité de partition (WA), dans lequel
le dispositif de commande (8) inclut en outre une unité de calcul de direction du vent (44) et une unité d'analyse d'image (46), dans lequel
l'unité d'analyse d'image est configurée pour détecter une position du premier trou de communication (54) dans la première unité de partition (WA) sur la base de l'image prise par l'unité d'imagerie (9), et
l'unité de calcul de direction du vent est configurée, sur la base de la position détectée du premier trou de communication (54), pour calculer une direction pour le soufflage du premier écoulement d'air (B1) et du deuxième écoulement d'air (B2) vers le premier trou de communication (54), et pour stocker le résultat de calcul dans l'unité de stockage de direction du vent (30) ;
dans lequel, dans les premier et deuxième modes de fonctionnement, le dispositif de commande (8) est configuré pour commander les angles d'inclinaison du premier organe d'ajustement de direction du vent (4a, 6a) et du deuxième organe d'ajustement de direction du vent (4b, 6b) sur la base du résultat de calcul stocké dans l'unité de stockage de direction du vent (30).

8. Système selon la revendication 4, dans lequel
le premier trou de communication (54) est disposé à une position pour la mise en communication d'un emplacement plus haut de la première pièce (R1) avec un emplacement plus haut de la deuxième pièce (R2), et
lorsque le système de climatisation (100) refroidit la deuxième pièce (R2) dans les premier et deuxième modes de fonctionnement, l'unité de commande de volume d'air (34) est configurée pour commander les vitesses de rotation du premier ventilateur (7a) et du deuxième ventilateur (7b) de sorte qu'un volume d'air d'un écoulement d'air soufflé vers le premier trou de communication (54) soit supérieur à un volume d'air réglé à l'avance.

9. Système selon la revendication 4, dans lequel
le premier trou de communication (54) est disposé à une position pour la mise en communication d'un emplacement plus haut de la première pièce (R1) avec un emplacement plus haut de la deuxième pièce (R2), et
lorsque le système de climatisation (100) chauffe la deuxième pièce dans les premier et deuxième modes de fonctionnement, l'unité de commande de volume d'air (34) est configurée pour commander les vitesses de rotation du premier ventilateur (7a) et du deuxième ventilateur (7b) de sorte qu'un volume d'air d'un écoulement d'air soufflé vers le premier trou de communication (54) soit inférieur à un volume d'air réglé à l'avance.

10. Système selon la revendication 2, le système de climatisation (100) comprenant en outre une unité de détection d'occupation (57) configurée pour être placée dans la deuxième pièce (R2) et configurée pour détecter une présence ou une absence d'un occupant dans la deuxième pièce (R2),
dans lequel le dispositif de commande (8) inclut en outre une unité de commande de fonctionnement (48) configurée pour commander les fonctionnements du climatiseur (1) et de la première soufflante (50) sur la base d'un signal de détection fourni depuis l'unité de détection d'occupation (57), et
dans les premier et deuxième modes de fonctionnement, lorsque l'unité de détection d'occupation (57) détecte l'absence d'une personne dans la deuxième pièce (R2), l'unité de commande de fonctionnement est configurée pour commander au climatiseur (1) d'arrêter le soufflage d'un écoulement d'air vers le premier trou de communication (54), et d'arrêter le fonctionnement de la première soufflante (50) .

11. Système selon la revendication 2, le système de climatisation (100) comprenant en outre une unité d'entrée d'occupation prévue (59) configurée pour recevoir une entrée relative à un temps d'entrée prévu et un temps de sortie prévu d'une personne dans la deuxième pièce (R2) et de celle-ci,
le dispositif de commande (8) incluant en outre une unité de commande de fonctionnement (48) configurée pour commander les fonctionnements du climatiseur et de la première soufflante sur la base du temps d'entrée prévu et du temps de sortie prévu dans la deuxième pièce (R2) et de celle-ci,
dans lequel, dans le deuxième mode de fonctionnement, l'unité de commande de fonctionnement (48) est configurée pour activer le climatiseur (1) et la première soufflante (50) à un temps avant le temps d'entrée prévu et arrêter le climatiseur (1) et la première soufflante (50) à un temps après le temps de sortie prévu.

12. Système selon la revendication 11, dans lequel, dans le premier mode de fonctionnement, l'unité de commande de fonctionnement (48) est configurée pour commander au climatiseur (1) de démarrer le soufflage du deuxième écoulement d'air (B2) vers le premier trou de communication (54) à un temps avant le temps d'entrée prévu, et commander au climatiseur (1) d'arrêter le soufflage du deuxième écoulement d'air (B2) vers le premier trou de communication (54) à un temps après le temps de sortie prévu.

13. Système selon l'une quelconque des revendications 1 à 12, comprenant en outre un premier organe d'introduction (52) raccordé à la surface supérieure de la première soufflante (50) et présentant une forme tubulaire avec une ouverture sur le côté du premier trou de communication (54) et une ouverture sur une entrée (55) de la première soufflante, le premier organe d'introduction étant configuré pour introduire le deuxième écoulement d'air (B2) s'étant écoulé à travers le premier trou de communication (54) dans la première soufflante (50), et la première soufflante (50) étant destinée à l'introduction du deuxième écoulement d'air (B2) dans la deuxième pièce (R2).

14. Système selon l'une quelconque des revendications 1 à 3, dans lequel
la pluralité de pièces comprend en outre une troisième pièce (R3), le système comprenant en outre :
une deuxième unité de partition (WA) séparant la première pièce (R1) et la troisième pièce (R3), avec un deuxième trou de communication (54b) pour la mise en communication de la première pièce (R1) avec la troisième pièce (R3),
dans lequel le système de climatisation (100) comprend en outre :
une deuxième soufflante (50b) placée dans la troisième pièce (R3), et
le système de climatisation comporte un quatrième mode de fonctionnement pour la climatisation de la deuxième pièce (R2) et de la troisième pièce (R3),
les informations stockées dans l'unité de stockage de direction du vent (30) incluent une quatrième information, la quatrième information indiquant que la direction du premier écoulement d'air (B1) est dirigée vers le premier trou de communication (54) et la direction du deuxième écoulement d'air (B2) est dirigée vers le deuxième trou de communication (54b),
dans lequel, dans le quatrième mode de fonctionnement, l'unité de commande de direction du vent (32) est configurée pour commander les angles d'inclinaison du premier organe d'ajustement de direction du vent (4a, 6a) et du deuxième organe d'ajustement de direction du vent (4b, 6b) sur la base de la quatrième information, et l'unité de commande de soufflage est configurée pour
commander la première soufflante (50) de sorte que le premier écoulement d'air (B1) ayant traversé le premier trou de communication (54) soit introduit dans la deuxième pièce (R2), et
commander la deuxième soufflante (50b) de sorte que le deuxième écoulement d'air (B2) ayant traversé le deuxième trou de communication (54b) soit introduit dans la troisième pièce (R3).

15. Système selon la revendication 14, comprenant en outre :
un deuxième capteur de température (S2) configuré pour détecter une deuxième température de la deuxième pièce (R2), et
un troisième capteur de température (S3) configuré pour détecter une troisième température de la troisième pièce (R3),
dans lequel le dispositif de commande inclut en outre une unité de commande de volume d'air (34), l'unité de commande de volume d'air (34) étant configurée pour commander un volume d'air du premier écoulement d'air (B1) et un volume d'air du deuxième écoulement d'air (B2),
dans lequel, dans le quatrième mode de fonctionnement,
l'unité de commande de volume d'air (34) est configurée pour
commander des vitesses de rotation du premier ventilateur (7a) et du deuxième ventilateur (7b) de sorte que le volume d'air du premier écoulement d'air (B1) soit supérieur au volume d'air du deuxième écoulement d'air (B2), lorsqu'une deuxième différence de température entre la deuxième température et une deuxième température de consigne réglée à l'avance est supérieure à une troisième différence de température entre la troisième température et une troisième température de consigne réglée à l'avance, et
commander des vitesses de rotation du premier ventilateur (7a) et du deuxième ventilateur (7b) de sorte que le volume d'air du deuxième écoulement d'air (B1) soit supérieur au volume d'air du premier écoulement d'air (B2), lorsque la troisième différence de température est supérieure à la deuxième différence de température.

16. Système selon la revendication 14 ou 15, comprenant en outre un deuxième organe d'introduction (52b) raccordé à une surface supérieure de la deuxième soufflante (50b) et présentant une forme tubulaire avec une ouverture sur le deuxième trou de communication (54b) et une ouverture sur une entrée de la deuxième soufflante (50b), le deuxième organe d'introduction étant configuré pour introduire le deuxième écoulement d'air (B2) s'étant écoulé dans le deuxième trou de communication (54b) dans la deuxième soufflante (50b), et la deuxième soufflante (50b) étant destinée à l'introduction du deuxième écoulement d'air (B2) dans la troisième pièce (R3).

17. Système selon l'une quelconque des revendications 14 à 16, le système de climatisation (100) comportant en outre un cinquième mode de fonctionnement pour la climatisation de la première pièce (R1) et de la troisième pièce (R3), et un sixième mode de fonctionnement pour la climatisation de la première pièce (R1), de la deuxième pièce (R2) et de la troisième pièce (R3),
les informations stockées dans l'unité de stockage de direction du vent (30) incluent une cinquième information, la cinquième information indiquant que la direction du premier écoulement d'air (B1) est dirigée vers la première pièce (R1) et la direction du deuxième écoulement d'air (B2) est dirigée vers le deuxième trou de communication (54b),
dans lequel, dans le cinquième mode de fonctionnement, l'unité de commande de direction du vent (32) est configurée pour commander les angles d'inclinaison du premier organe d'ajustement de direction du vent (4a, 6a) et du deuxième organe d'ajustement de direction du vent (4b, 6b) sur la base de la cinquième information, et l'unité de commande de soufflage est configurée pour
arrêter le fonctionnement de la première soufflante (50), et
commander la deuxième soufflante (50b) de sorte que le deuxième écoulement d'air (B2) ayant traversé le deuxième trou de communication (54b) soit introduit dans la troisième pièce (R3),
dans lequel, dans le sixième mode de fonctionnement, le dispositif de commande (8) est configuré pour commuter le mode de fonctionnement du système de climatisation entre le premier mode de fonctionnement, le quatrième mode de fonctionnement et le cinquième mode de fonctionnement selon un laps de temps.
